(19) Europäisches Patentamt / European Patent Office / Office européen des brevets

(11) **EP 1 819 090 B1**

(12) **EUROPEAN PATENT SPECIFICATION**

(45) Date of publication and mention
of the grant of the patent:
**11.07.2012 Bulletin 2012/28**

(21) Application number: **05806273.8**

(22) Date of filing: **11.11.2005**

(51) Int Cl.:
*H04L 9/32* (2006.01)     *H04L 29/06* (2006.01)

(86) International application number:
**PCT/JP2005/020729**

(87) International publication number:
**WO 2006/057171 (01.06.2006 Gazette 2006/22)**

(54) **SIGNATURE AND VERIFYING METHOD, AND SIGNATURE AND VERIFYING DEVICE**

SIGNATUR- UND VERIFIKATIONSVERFAHREN UND SIGNATUR- UND VERIFIKATIONSEINRICHTUNG

PROCÉDÉ DE SIGNATURE ET DE VÉRIFICATION, ET DISPOSITIF DE SIGNATURE ET DE VÉRIFICATION

(84) Designated Contracting States:
**FR GB**

(30) Priority: **29.11.2004 JP 2004343703**

(43) Date of publication of application:
**15.08.2007 Bulletin 2007/33**

(60) Divisional application:
**11169627.4 / 2 381 616**

(73) Proprietor: **NEC Corporation**
**Minato-ku**
**Tokyo 108-8001 (JP)**

(72) Inventors:
• **TERANISHI, Isamu,**
**Nec Corporation**
**Minato-ku,**
**Tokyo 1088001 (JP)**
• **SAKO, Kazue,**
**Nec Corporation**
**Minato-ku,**
**Tokyo 1088001 (JP)**
• **TAGUCHI, Daigo,**
**Nec Corporation**
**Minato-ku,**
**Tokyo 1088001 (JP)**
• **NODA, Jun,**
**Nec Corporation**
**Tokyo 1088001 (JP)**

(74) Representative: **Reeve, Nicholas Edward et al**
**16 Theobalds Road**
**London WC1X 8PL (GB)**

(56) References cited:
JP-A- 2 275 983      JP-A- 6 095 590
JP-A- 9 270 787      JP-A- 61 077 440
JP-A- 2000 221 882

• ANNA LYSYANSKAYA ET AL: "Sequential Aggregate Signatures from Trapdoor Permutations" 17 April 2004 (2004-04-17), ADVANCES IN CRYPTOLOGY - EUROCRYPT 2004; [LECTURE NOTES IN COMPUTER SCIENCE;;LNCS], SPRINGER-VERLAG, BERLIN/ HEIDELBERG, PAGE(S) 74 - 90 , XP019005045 ISBN: 978-3-540-21935-4 * the whole document *
• WALTER C D: "Montgomery exponentiation needs no final subtractions" ELECTRONICS LETTERS, IEE STEVENAGE, GB LNKD- DOI: 10.1049/EL:19991230, vol. 35, no. 21, 14 October 1999 (1999-10-14), pages 1831-1832, XP006012810 ISSN: 0013-5194
• MITOMI S ET AL: "A GENERAL MODEL OF MULTISIGNATURE SCHEMES WITH MESSAGE FLEXIBILITY, ORDER FLEXIBILITY AND ORDER VERIFIABILITY" IEICE TRANSACTIONS ON FUNDAMENTALS OF ELECTRONICS, COMMUNICATIONS AND COMPUTER SCIENCES, ENGINEERING SCIENCES SOCIETY, TOKYO, JP, vol. E84A, no. 10, 1 October 2001 (2001-10-01), pages 2488-2499, XP001107779 ISSN: 0916-8508

- KAWAUCHI K ET AL: "PROBABILISTIC MULTI-SIGNATURE SCHEMES USING A ONE-WAY TRAPDOOR PERMUTATION" IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E87-A, no. 5, 1 May 2004 (2004-05-01) , pages 1141-1153, XP001196120 ISSN: 0916-8508

**Description**

TECHNICAL FIELD

The present invention relates to a signature method and verification method and a signature device and verification device, and more particularly, to a signature method and verification method and a signature device and verification device where the signature length does not depend on the number of signature devices when a plurality of signature devices are used for signatures.

BACKGROUND ART

As computers and the Internet environment are widely used, more and more messages are sent and received electronically. In this case, it is desirable that an electronic signature be added to a message to prevent the message from being altered while the message is sent.

However, when multiple signature devices create signatures using a well-known signature method such as RSA or DSA, all signature devices must individually create signed texts and save all those signed texts to indicate that all signature devices have signed. Therefore, because the total data length of the signed texts is proportional to the number of signature devices, the efficiency is degraded when there are many signature devices.

One of the signature methods to solve this problem is proposed in non-Patent Document 1. FIG. 11 shows the procedure for this conventional signature method.

The following defines the meaning of the symbols used in this specification. "$\|$" means the concatenation of bit strings. "$\bigcirc$" means the exclusive OR on a bit basis. "$\wedge$" represents the arithmetic operator for exponentiating the left operand by the exponent in the right operand. For example, $f^{\wedge}\{-1\}$ means $f^{-1}$. "$\_\{x\}$" represents that x is a subscript. For example, $u\_\{i\}$ means $u_i$.

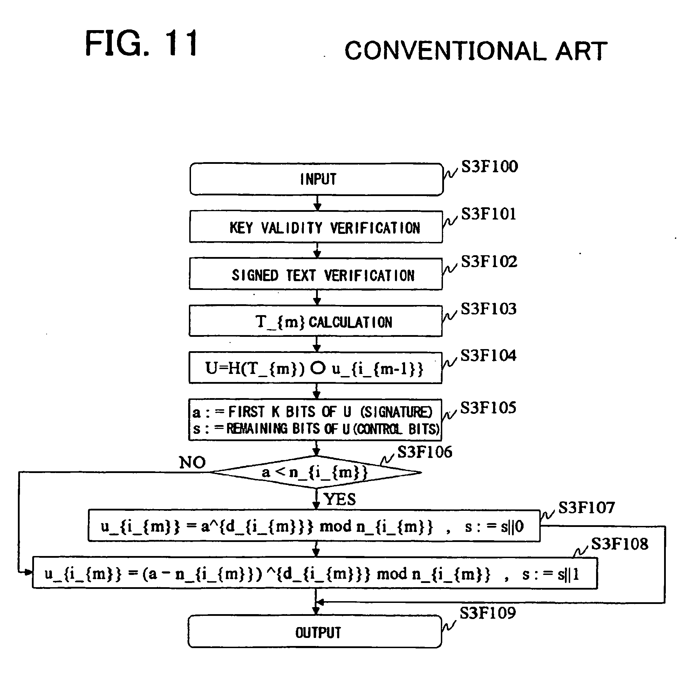

Referring to FIG. 11, when a signed text $u\_\{i\_\{m-1\}\}$ to be signed is entered (S3F100), the verification of the validity of the key owned (S3F101) and the verification of the validity of the signed text $u\_\{i\_\{m-1\}\}$ (S3F102) are performed and, after that, $T\_\{m\}$, which is the concatenation of the public key of the local signature device and the public keys of the signature devices that have already signed, is calculated (S3F103). Next, the exclusive OR U between the hash value of $T\_\{m\}$ and the signed text $u\_\{i\_\{m-1\}\}$ is calculated (S3F104), the first k security parameter bits of the bit string U are assigned to a, and the remaining bits are assigned to s (S3F105). Next, a is compared with the RSA modulus $n\_\{i\_\{m\}\}$ of the local signature device (S3F106) and, if a is smaller than the RSA modulus $n\_\{i\_\{m\}\}$, the signed text $u\_\{i\_\{m\}\}$ is calculated for a using the private key $d\_\{i\_\{m\}$ according to the RSA method (S3F107), and the result is output (S3F109). At this time, one-bit information 0 is added to s as the control information. If a is larger than the RSA modulus $n\_\{i\_\{m\}\}$, the RSA signature cannot be calculated for a number larger than the modulus and, therefore, $n\_\{i\_\{m\}\}$ is subtracted from a, the signed text $u\_\{i\_\{m\}\}$ is calculated for the resulting a (S3F108), and the result is output (S3F109). At this time, one-bit information 1 is added to s as the control information.

The signature cannot be calculated for a number larger than the RSA modulus $n\_\{i\_\{m\}\}$ of a signature device when RSA is used as described above. To solve this problem, the method according to the conventional technology described in the Non-Patent Document I subtracts the modulus $n\_(i\_(m))$ from a number, which is larger, before the signature is added. At this time, to allow the verification to be performed later, one-bit control information (1 when the modulus is exceeded, and 0 when the modulus is not exceeded) is added at the end. When the signed text $u\_\{i\_\{m\}\}$ is verified, the verification is repeated by using the public keys of the signature devices in reverse order of adding signatures and, when the predetermined initial value is finally obtained, the signatures are determined to be valid.

[Non-Patent Document 1]

Anna Lysyanskaya, Silvio Micali, Leonid Reyzin, Hovav Shacham. Sequential Aggregate Signatures from Trapdoor Permutations. In Advances in Cryptology -- EUROCRYPT 2004, vol. 3027 of LNCS, pp. 74-90. Springer-Verlag, 2004.

[Non-Patent Document 2]

"Alfred J. Menezes Paul C. van Oorschot, and Scott A. Vanstone. Handbook of Applied Cryptography. CRC Press." (http://www.cacr.math.uwaterloo.ca/hac/).

The conventional signature method described in Non-Patent Document 1, in which the total data length of signed texts is not proportional to the number of signature devices, can reduce the amount of memory for storing signed texts even if multiple signature devices add signature sequentially and can reduce the amount of communication when communication is performed. However, because the signature length is determined by the fixed value + number of signatures, the problem is that the signature length is prolonged, though little by little, as the number of signatures increases.

We have appreciated it would be desirable to improve the problems with the conventional signature method described above and to make the signature fixed-length regardless of the number of signature devices.

SUMMARY OF THE INVENTION

The invention is defined in the independent claims to which reference should now be made. Advantageous features are set forth in the dependent claims.

The signature device $i_{m}$ performs a first operation in which the device performs no operation if a received signed text $u_{i_{m-1}}$ exceeds the modulus $n_{i_{m}}$ but, if not, adds an RSA-signature-based signature, a second operation in which the device multiplies the result of the first operation by a function that maps the result to a value larger by the modulus $n_{i_{m}}$, and a third operation in which the device performs no operation if the result of the second operation exceeds the modulus $n_{i_{m}}$ but, if not, adds an RSA-signature-based signature. At this time, if the number of bits of the RSA modulus of each signature device is equal to the security parameter $\kappa$, the modulus $n_{i_{m}}$ of the signed text $u_{i_{(m-1)}}$ and the signature device $i_{m}$ becomes a number smaller than $2^{\kappa}$. In the first operation, because an RSA-signature-based signature is added to the signed text $u_{i_{m-1}}$ whose value is 0 to $n_{i_{m}}$, the value after the first operation is 0 to $n_{i_{m}}$. On the other hand, because no operation is performed for the signed text $u_{i_{m-1}}$ whose value is $n_{i_{m}}$ to $2^{\kappa}$, the value after the first operation is $n_{i_{m}}$ to $2^{\kappa}$. In the second operation, because $n_{i_{m}}$ is added to the value after the first operation with $2^{\kappa}$ as the modulus, the value after the second operation also becomes a number smaller than $2^{\kappa}$ but, if the value after the first operation is $n_{i_{m}}$ to $2^{\kappa}$, the value after the second operation is 0 to $n_{i_{m}}$. Therefore, by adding an RSA-signaturc-based signature to a value after the second operation that is 0 to $n_{i_{m}}$, at least one RSA signature is added to the signed text $u_{i_{m-1}}$ of any value. In addition, there is a one-to-one correspondence between the value after the third operation, that is, the signature value $u_{i_m}$, and the received signed text $u_{i_{m-1)}}$, the performed signature operation can be determined uniquely by the value of the signature value $u_{i_{m}}$ and, therefore, there is no need to add control bits as in Non-Patent Document 1.

The first effect is that the signature length does not depend on the number of signature devices. The reason is that the number of bits of the data before the signature is equal to the number of bits of the data after the signature.

The second effect is that the sequence of signature devices may be changed each time the signature is created. The reason is the same as that of the first effect, that is, the number of bits of the data before the signature is equal to the number of bits of the data after the signature. Therefore, the input to each signature device is fixed regardless of the sequence in which the signature device adds its signature, thus making it possible for the signature device to add the signature by performing the same operation regardless of the sequence.

The third effect is that an attacker, who makes bad use of a signature device, cannot forge a signed text that has passed through honest signature devices along the path. The reason is that, whatever u is input to a signature device, u is changed by at least one of two RSA calculations that are performed up to two times at the signature time.

The fourth effect is that there is no need to know the number (m) of signature devices when the system operation is started but that the operation can be performed without any problem even if the number (m) of signature devices is dynamically changed during the operation. The reason is that the signature procedure for m+1 signature devices is that another signature operation is performed in the same way after the signature procedure for m signature devices is performed, meaning that the signature operation method does not depend on the number m of signature devices.

BRIEF DESCRIPTION OF THE DRAWINGS

FIG. 1 is a block diagram of a first embodiment of the present invention.
FIG. 2 is a block diagram showing the configuration of a signature device in the first embodiment of the present invention.
FIG. 3 is a flowchart showing the operation of the signature device in the first embodiment of the present invention.
FIG. 4 is a block diagram showing the configuration of a verification device in the first embodiment of the present invention.
FIG. 5 is a flowchart showing the operation of the verification device in the first embodiment of the present invention.
FIG. 6 is a block diagram of a second embodiment of the present invention.
FIG. 7 is a block diagram showing the configuration of a signature device in the second embodiment of the present invention.
FIG. 8 is a flowchart showing the operation of the signature device in the second embodiment of the present invention.

FIG. 9 is a block diagram showing the configuration of a verification device in the second embodiment of the present invention.

FIG. 10 is a flowchart showing the operation of the verification device in the second embodiment of the present invention.

FIG. 11 is a flowchart showing the operation of a conventional signature device.

EXPLANATIONS OF SYMBOLS

$i\_{1}, ..., i\_{m-1}$ Signature device
$i\_{1}-2, ..., i\_{m-1}-2$ Verification device
$i\_{1}-3, ..., i\_{m-1}-3$ Key storage device
$i\_{1}-4, ..., i\_{m-1}-4$ Key validity verification device
$i\_{1}-5, ..., i\_{m-1}-5$ Key generation device
$M\_{1}, ..., M\_{m}$ Message
$u\_{i\_{0}}, ..., u\_{i\_{m-1}}$ Signed text
$w\_{i\_{0}}, ..., w\_{i\_{m-1}}$ Auxiliary information

DETAILED DESCRIPTION

[First embodiment]

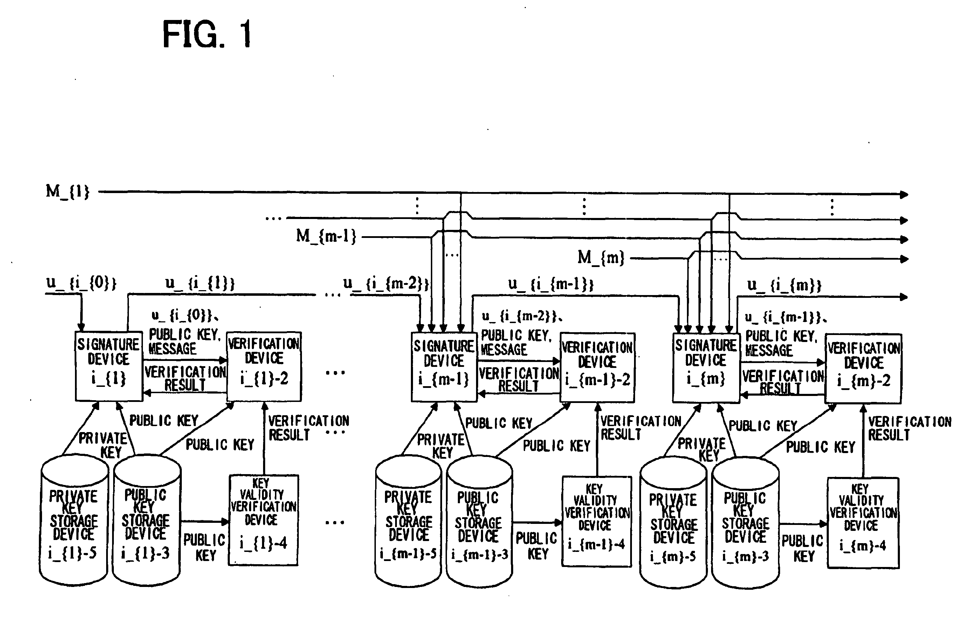

Referring to FIG. 1, a first embodiment of the present invention comprises signature devices $i\_{1}, ..., i\_{m}$, verification devices $i\_{1}-2, ..., i\_{m}-2$, public key storage devices $i\_{1}-3, ..., i\_{m}-3$, key validity verification devices $i\_{1}-4, ..., i\_{m}-4$, and private key storage devices $i\_{1}-5, ..., i\_{m}-5$.

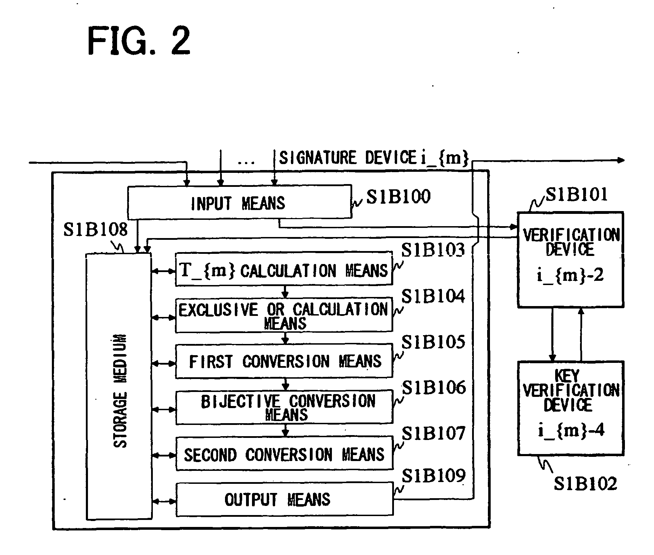

Referring to FIG. 2, the signature device $i\_{m}$ comprises input means S1B100, $T\_{m}$ calculation means S1B103, exclusive OR calculation means S1B104, first conversion means S1B105, bijective conversion means S1B106, second conversion means S1B107, a storage medium S1B108, and output means S1B109. Other signature devices have the same configuration as the signature device $i\_{m}$.

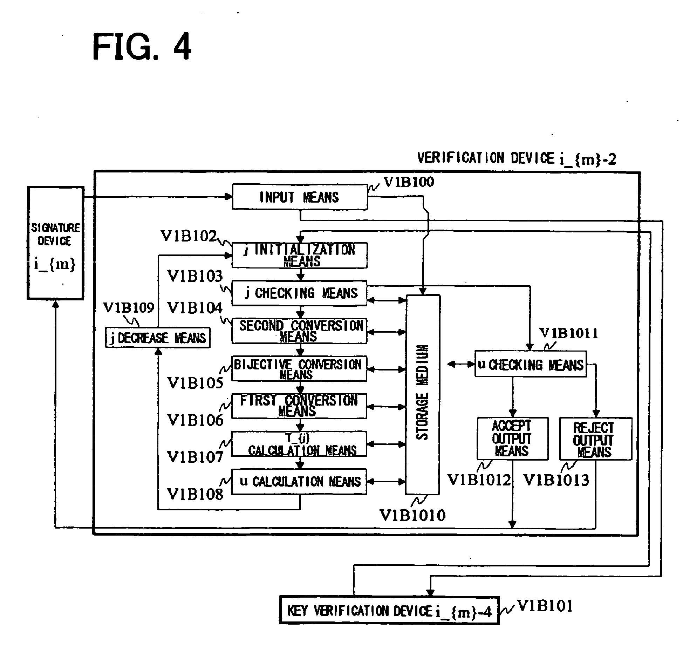

Referring to FIG. 4, the verification device $i\_{m}-2$ comprises input means V1B100, j initialization means V1B102, j checking means V1B103, second conversion means V1B104, bijective conversion means V1B105, first conversion means V1B106, $T\_{j}$ calculation means V1B107, u calculation means V1B108, j decrease means V1B109, a storage medium V1B1010, u checking means V1B1011, accept output means V1B1012, and reject output means V1B1013. Other verification devices have the same configuration as the verification device $i\_{m}-2$.

The following describes the overview of this embodiment. First, the public key/private key pair of the signature device $i\_{1}$, an initial value $u\_{i\_{0}}$, and a message $M\_{1}$ are entered into the signature device $i\_{1}$. The signature device $i\_{1}$ uses $u\_{i\_{0}}$ to create a signed text $u\_{i\_{1}}$ for the message $M\_{1}$. In the same manner, the public key/ private key pair of the signature device $i\_{j}$, signed text $u\_{i\_{j-1}}$ output by the immediately preceding signature device, and a message $M\_{j}$ are entered sequentially into the signature device $i\_{j}$, and the signature device $i\_{j}$ uses them to create a signed text $u\_{i\_{j}}$. The signed text $u\_{i\_{j}}$ is data representing that the signature device $i\_{1}$ signs the message $M\_{1}$, the signature device $i\_{2}$ sign the message $M\_{2}$, ..., and the signature device $i\_{j}$ signs the message $M\_{j}$.

For each j, the public keys and the messages $M\_{1}, ..., M\_{j-1}$ of the signature devices $i\_{1}, ..., i\_{j}$ and the signed text $u\_{i\_{j-1}}$ are entered into the verification device $i\_{j}$. Then, the verification device $i\_{j}$ verifies whether or not the signed text $u\_{i\_{j-1}}$ is a signed text created for the messages $M\_{1}, ..., M\_{j-1}$ using the private keys of the signature devices $i\_{1}, ..., i\_{j-1}$

The goal of the system in this embodiment is to create a signed text $u\_{i\_{m}}$, that is, data representing that the signature device $i\_{1}$ signs the message $M\_{1}$, the signature device $i\_{2}$ signs the message $M\_{2}$, ..., and the signature device $i\_{m}$ signs the message $M\_{m}$.

Note that there is no need to know the number of signature devices, m, when the operation of the system in this embodiment is started. The number of signature devices, m, may be dynamically changed during the operation. The signature devices $i\_{1}, ..., i\_{m}$ perform the same operation. The verification devices, the public key storage devices, the key validity verification devices, and the private key storage devices also perform basically the same operation.

Next, the following describes this embodiment more in detail.

The public key $pk\_{i}$ and the private key $sk\_{i}$ of the signature device $i\_{j}$ are $(n\_{i}, e\_{i})$ and $(p\_{i\_{j}}, q\_{i\_{j}}, d\_{i\_{j}})$ respectively and satisfy the following five properties.

1. $p_{i_{j}}$ and $q_{i_{j}}$ are prime numbers.

2. $n_{i_{j}}=p_{i_{j}}q_{i_{j}}$

3. The number of bits of $n_{i_{j}}$ is equal to the security parameter $\kappa$.

4. The number of bits of $p_{i_{j}}$ is almost equal to the number of bits of $q_{i_{j}}$.

5. $e_{i_{j}}$ and $\Phi(n_{i})$ are relatively prime.

6. $d_{i_{j}}=e_{i_{j}}-1 \bmod \Phi(n_{i})$

where $\Phi(n_{i})$ is the number of relatively prime integers that are one or larger and smaller than $n_{i}$ and that are relatively prime to $n_{i}$. The method for creating $pk_{i}$ and $sk_{i}$ that satisfy those properties is described, for example, in Non-Patent Document 2 "Alfred J. Menezes Paul C. van Oorschot, and Scott A. Vanstone. Handbook of Applied Cryptography. CRC Press." (http://www.cacr.math.uwaterloo.ca/hac/).

From the viewpoint of safety, it is desirable that everyone can confirm that $e_{i_{j}}$ and $\Phi(n_{i})$ are relatively prime. One of the methods for making this confirmation possible is to set $e_{i_{j}}$ to a prime number larger than $n_{i}$. However, $e_{(i_{j}}$ need not always satisfy this property.

For each of j=1, ..., m, the private key storage device $i_{j}$ -5 stores the private key $sk_{(i_{j}}$, and the public key storage device $i_{j}$-3 stores the public keys $pk_{1}$, ..., $pk_{m}$.

The following describes the operation of the key validity verification device $i_{m}$-4. The key validity verification device $i_{m}$-4 is a device that verifies the validity of the public keys $pk_{i_{1}}$, ..., $pk_{i_{m-1}}$. To confirm the validity, the key validity verification device first reads $pk_{i_{1}}$, ..., $pk_{i_{m-1}}$ from the key storage device $i_{m}$-3 and confirms that $pk_{i_{1}}$, ..., $pk_{i_{m-1}}$ are different to each other. When m=1, the key validity verification device does not perform any confirmation operation.

From the viewpoint of safety, although it is desirable to confirm that $e_{i_{j}}$ and $\Phi(n_{i})$ are relatively prime, it is also possible to omit this confirmation.

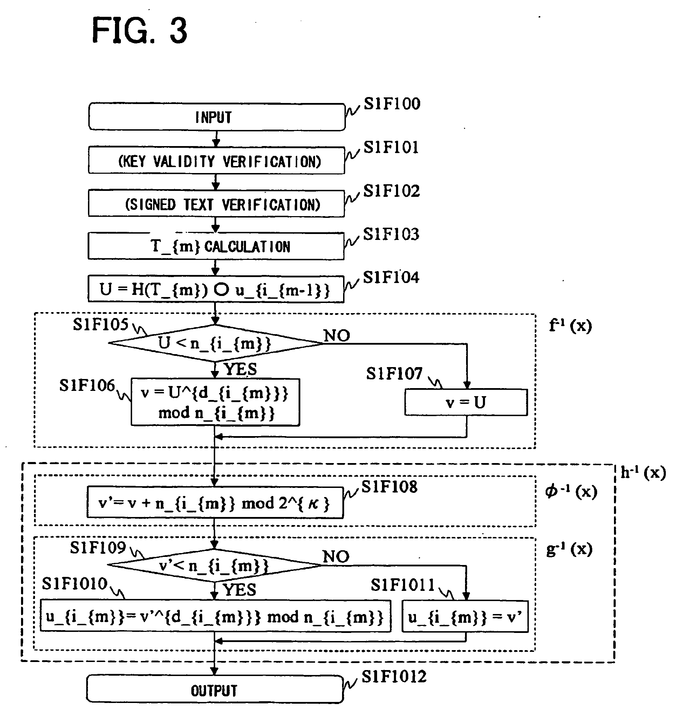

The following describes the operation of the signature device $i_{m}$. With reference to FIG. 2 and FIG. 3, the following describes how the signature device $i_{m}$ signs the message $M_{m}$ when the messages $M_{1}$, ..., $M_{m}$ and the signed text $u_{i_{m-1}}$ for the messages $M_{1}$, ..., $M_{m-1}$, created by the signature devices $i_{1}$, ...., $i_{m-1}$ using the public keys $pk_{i_{1}}$, .... $pk_{i_{m-1}}$, are entered.

First, via the input means S1B101, the signature device $i_{m}$ reads $M_{1}$, ..., $M_{m}$, $pk_{i_{1}}$, ..., $pk_{i_{m}}$, $sk_{i_{m}}$, and $u_{i_{m-1}}$ and stores them in the storage medium S1B100 (S1F100). Note that, when m=1, $u_{i_{0}}=0$ is assumed.

Next, the signature device $i_{m}$ sends $u_{i_{m-1}}$, $M_{1}$, ..., $M_{m-1}$, and $pk_{i_{1}}$, ..., $pk_{i_{m-1}}$ to the verification device $i_{m}$-2. The verification device $i_{m}$-2 verifies the validity of the signed text $u_{i_{m-1}}$ (S1B101, S1F102). At this time, the verification device $i_{m}$-2 sends $pk_{i_{1}}$, ..., $pk_{i_{m-1}}$ to the key validity verification device $i_{m}$-4. The key validity verification device $i_{m}$-4 verifies the validity of the keys (S1B102, S1F101). Note that, when m=1, the key validity verification device $i_{m}$-4 only confirms that $u_{i_{0}}=0$.

Although it is desirable to perform the verification of $u_{i_{m-1}}$ and the verification of key validity described above from the viewpoint of safety, one of the operations or both operations may be omitted to increase efficiency.

Next, via the $T_{m}$ calculation means S1B103, the signature device $i_{m}$ reads necessary data from the storage medium S1B108 and calculates $T_{m}=M_{1}\|...\|M_{m}\|pk_{i_{1}}\|...\|pk_{i_{m}}$ (S1F103). After the calculation, the $T_{m}$ calculation means S1B103 writes the calculation result into the storage medium S1B108.

Next, via the exclusive OR means S1B104, the signature device $i_{m}$ reads necessary data from the storage medium S1B108, calculates $U=H(T_{m})\bigcirc u_{i_{m-1}}$, and writes the calculation result into the storage medium S1B108 (S1F104). H is the hash function that outputs the hash value of the same number of bits as that of the input.

Next, via the first conversion means S1B105, the signature device $i_{m}$ reads data, entered into the signature device $i_{m}$, from the storage medium S1B108 and first checks if U is smaller than $n_{i_{m}}$ (S1F105). If $U<n_{i_{m}}$, the signature device $i_{m}$ calculates $v=u^{d_{i_{m}}} \bmod n_{i_{m}}$ via the first conversion means S1B105, and writes the calculation result into the storage medium S1B108 (S1F106). Conversely, if $U \geq n_{i_{m}}$, the signature device $i_{m}$ performs the calculation v=u via the first conversion means S1B105 and writes the calculation result into the storage medium S1B108 (S1F107).

Next, via the bijective conversion means S1B106, the signature device $i_{m}$ reads necessary data from the storage medium S1B108, calculates $v'=v+n_{i_{m}} \bmod 2^{\kappa}$, and writes the calculation result into the storage medium S1B108 (S1F108).

Next, via the second conversion means S1B107, the signature device $i_{m}$ reads necessary data from the storage medium S1B108 and checks if v' is smaller than $n_{i_{m}}$ (S1F109). If $v'<n_{i_{m}}$, the signature device $i_{m}$ calculates $u_{i_{m}}=v'^{d_{i_{m}}} \bmod n_{i_{m}}$ and writes the calculation result into the storage medium S1B108 (S1F1010). Conversely, if $v' \geq n_{i_{m}}$, the signature device $i_{m}$ calculates $u_{i_{m}}=v'$ via the second conversion means S1B107 and writes the calculation result into the storage medium S1B108 (S1F1011).

Finally, via the output means S1B109, the signature device $i_{m}$ reads $u_{i_{m}}$ from the storage medium S1B108 and outputs it (S1F1012).

As described above, the signature device i_{m} checks if the received signed text u_{i_{m-1}} exceeds the modulus n_{i_{m}}. The signature device i_{m} performs no operation if the received signed text u_{i_{m-1}} exceeds the modulus n_{i_{m}} but performs the first operation, in which an RSA-based signature is added, if the received signed text u_{i_{m-1}} does not exceed the modulus n_{i_{m}}. The signature device i_{m} performs the second operation, in which the result of the first operation is multiplied by the function that maps the result to a value larger by modulus n_{i_{m}}. The signature device i_{m} checks if the result of the second operation exceeds modulus n_{i_{m}}, and performs no operation if the result exceeds the modulus n_{i_{m}} but performs the RSA-based third operation to add the signature if the result does not exceed the modulus n_{i_{m}}. Although the RSA signature operation is redundantly performed twice depending upon the value of the signed text u_{i_{m-1}}, the signature operation that is performed can be uniquely determined by the value of the signature value u_{i_{m}} and, therefore, there is no need to add control bits as in the method described in Non-Patent Document 1.

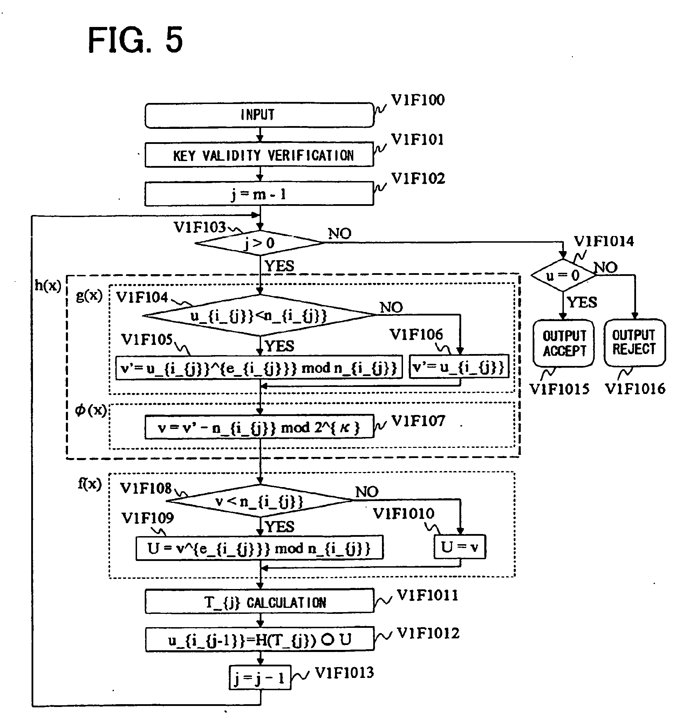

Next, with reference to FIG. 4 and FIG. 5, the following describes how the verification device i_{m}-2 verifies the signed text u_{m-1}.

First, via the input means V1B100, the verification device i_{m}-2 reads pk_{i_{1}}, ..., pk_{i_{m-1}} from the public key storage device i_{m}-3 and, in addition, reads messages M_{1}, ..., M_{m-1} (V1F100). The data that is read is written into the storage medium V1B1010 by the input means V1B100.

Next, the verification device i_{m}-2 sends the pk_{i_{1}}, ..., pk_{i_{m-1}} to the key verification device i_{m}-4 via the input means V1B100 to request it to verify the validity of the public keys pk_{i_{1}}, ..., pk_{i_{m-1}} (V1B101, V1F101).

Next, to sequentially verify the signature devices in reverse order from the immediately-preceding signature device to the first signature device, the verification device i_{m}-2 sets m-1 in the variable j, which manages which message in which signature device is being verified, via the j initialization means V1B102 (V1F102).

Next, the verification device i_{m}-2 checks if j>0 via the j checking means V1B103 (V1F103).

The following describes the operation of the verification device i_{m}-2 when j>0. The operation performed when j>0 is not satisfied will be described later.

Next, via the second conversion means V1B104, the verification device i_{m}-2 first reads necessary data from the storage medium V1B1010 and checks if u_{i_{j}}<n_{i_{j}} (V1F104).

If u_{i_{j}}<n_{i_{j}}, the verification device i_{m}-2 calculates v'=u_{i_{j}}^{e_{i_{j}}} mod n_{i_{j}} and writes the calculation result into the storage medium V1B1010 (V1F105) via the second conversion means V1B104.

Conversely, if u_{i_{j}}<n_{i_{j}} is not satisfied, the verification device i_{m}-2 sets v'=u_{i_{j}} and writes the calculation result into the storage medium V1B1010 via the second conversion means V1B104 (V1F106).

Next, via the bijective calculation means V1B105, the verification device i_{m}-2 reads necessary data from the storage medium V1B1010, calculates v=v'-n_{i_{m}} mod 2^{κ}, and writes the calculation result into storage medium V1B1010 (V1F107).

Next, via the first conversion means V1B106, the verification device i_{m}-2 reads necessary data from the storage medium V1B1010 and first checks if v<n_{i_{j}} (V1F108).

If v<n_{i_{j}}, the verification device i_{m}-2 calculates U=v^{e_{i_{j}}} mod n_{i_{j}} and writes the calculation result into the storage medium V1B1010 via the first conversion means V1B106 (V1F109).

On the other hand, if v<n_{i_{j}} is not satisfied, the verification device i_{m}-2 performs the calculation U=v and writes the calculation result into the storage medium V1B1010 via the first conversion means V1B106 (V1F1010).

Next, via the T_{j} calculation means V1B107, the verification device i_{m}-2 reads necessary data from the storage medium V1B1010, calculates T_{j}=M_{1}∥...∥M_{j}∥pk_{i_{1}}∥...∥pk_{i_{j}}, and writes the calculation result into the storage medium V1B1010 (V1F1011).

Next, via the u calculation means V1B108, the verification device i_{m}-2 reads necessary data from the storage medium V1B1010, calculates u_{i_{j-1}}=H(T_{j})○ U, and writes the calculation result into the storage medium V1B1010 (V1F1012).

Next, the verification device i_{m}-2 sets j=j-I via the j decrease means V1B109 (V1F1013).

The verification device i_{m}-2 checks if j>0 again via the j checking means V1B103 (V1F103).

If j>0, the verification device i_{m}-2 performs the processing in step V1F104 and the following steps.

If j=0, the verification device i_{m}-2 reads necessary data from the storage medium V1B1010 and checks if u=0 via the u checking means V1B1011 (V1F1014).

If u=0, the verification device i_{m}-2 outputs accept, which indicates successful verification, via the accept output means V1B1012 (V1F1015); otherwise, the verification device i_{m}-2 outputs reject, which indicates unsuccessful verification, via the reject output means V1B1013 (V1F1016).

Now, let f(x), g(x), and Φ(x) be the operations enclosed by the dotted line in FIG. 5. That is,

$$f(x)=x^{e_{i_{j}}} \bmod n_{i_{j}} \text{ if } x<n_{i_{j}}$$

$$=x \text{ otherwise.}$$

$$g(x)=x^{e_{i_{j}}} \bmod n_{i_{j}} \text{ if } x<n_{i_{j}}$$

$$=x \text{ otherwise.}$$

$$\phi(x)=x+n_{i_{j}} \bmod 2^{\kappa}$$

$$h(x)=g(\phi(x))$$

Then, the operations $f^{-1}(x)$, $g^{-1}(x)$, $h^{-1}(x)$, and $\phi^{-1}(x)$ in the part enclosed by the dotted line in FIG. 3 are the inverse functions of $f(x)$, $g(x)$, $h(x)$, and $\phi(x)$, respectively.

Therefore, the signature device $i_{m}$ in this embodiment creates a signed text using the calculation expression $u_{i_{m}}-(g_{m}^{-1}(\phi^{-1}(f_{m}^{-1}(H(T_{m}) \bigcirc u_{i_{m-1}}))))$. The verification device $i_{m}-2$ in this embodiment finds the signed text that is entered into the immediately preceding signature device using $u_{i_{m-2}}=H(T_{m-1}) \bigcirc (f_{m-1}(\phi(g_{m-1}(u_{i_{m-1}}))))$, finds the initial value of the input by repeating the same processing until the first signature device is reached, and checks if the initial value that is found matches the predetermined initial value (value of 0 in this embodiment).

Next, the following describes the effect of this embodiment.

The first effect is that the signature length does not depend on the number of signature devices. The reason is that the number of bits of the data before the signature is equal to the number of bits of the data after the signature.

The second effect is that the sequence of signature devices may be changed each time the signature is created. The reason is the same as that of the first effect, that is, the number of bits of the data before the signature is equal to the number of bits of the data after the signature. Therefore, the input to each signature device is fixed regardless of the sequence in which the signature device adds its signature, thus making it possible for the signature device to add the signature by performing the same operation regardless of the sequence. However, it is necessary to notify the verification device about the sequence in which the signature is added.

The third effect is that an attacker, who makes bad use of a signature device, cannot forge a signed text that has passed through honest signature devices along the path. The reason is that, whatever u is input to a signature device, u is changed by at least one of two RSA calculations that are performed at the signature time.

The fourth effect is that there is no need to know the number (m) of signature devices when the system operation is started but that the operation can be performed without any problem even if the number (m) of signature devices is dynamically changed during the operation. The reason is that the signature procedure for m+1 signature devices is that another signature operation is performed in the same way after the signature procedure for m signature devices is performed, meaning that the signature operation method does not depend on the number m of signature devices.

In the first embodiment described above, the RSA function, which is the most typical function, is used in the description. More generally, a signature method in which the signature length does not depend on the number of signers and which ensures safety can be implemented in the same way as in the first embodiment if there is a subset X having $\{0,1\}^{\kappa}$ and if the conditions (1) and (2) described below are satisfied.

(1) f and g are trapdoor one-way replacements, and X is included in both the domain of f and the domain of g.
(2) $\phi$ is a bijection on $(0,1)^{\kappa}$ where both $\phi$ and $\phi^{-1}$ can be calculated in polynomial time, and $\{0,1\}^{\kappa} / X$ is mapped to X.

The trapdoor one-way replacement is a function that satisfies the following four properties:

1) Is easy to calculate f.
2) Is difficult for a person, who does not know the trapdoor (also called a private key), to calculate $f^{-1}$.

3) Is easy for a person, who knows the trapdoor, to calculate f^{-1}.
4) Is a bijection.

In addition, if there is a subset X having {0,1 }^{κ} and if the conditions (1) and (2) described below are satisfied, a signature method in which the signature length does not depend on the number of signers and which ensures safety can be implemented in the same way as in the first embodiment.

(1) f is a trapdoor one-way replacement, and X is included in the domain of f.
(2) h is a trapdoor one-way replacement, and {0,1}^{κ}\ X is included in the domain of h.

[Second embodiment]

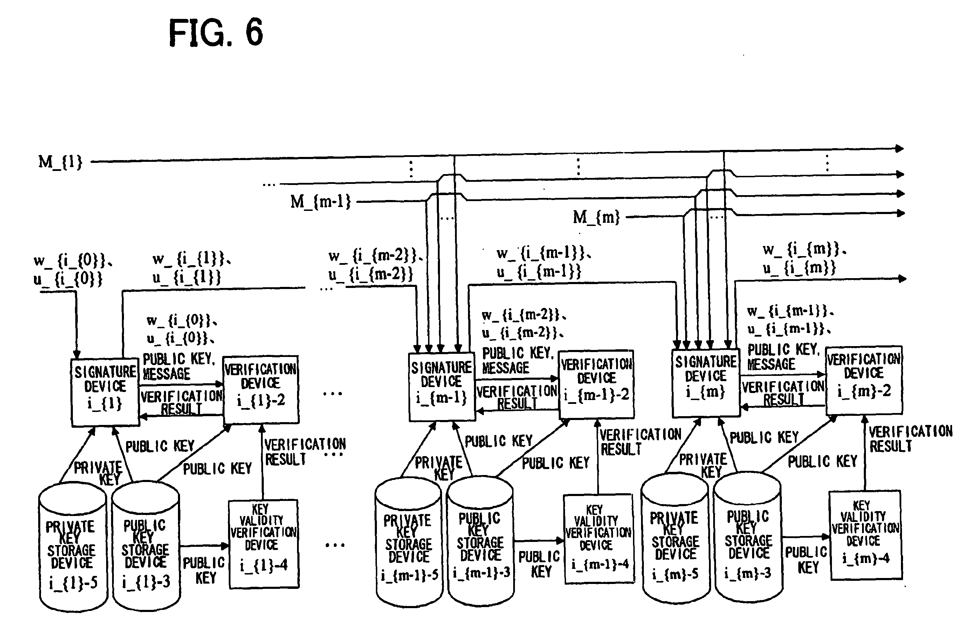

Referring to FIG. 6, a second embodiment of the present invention comprises signature devices i_{1}, ..., i_{m}, verification devices i_{1}-2, ..., i_{m}-2, public key storage devices i_{1}-3, ..., i_{m}-3, key validity verification devices i_{1}-4, ..., i_{m}-4, and private key storage devices i_{1}-5, ..., i_{m}-5.

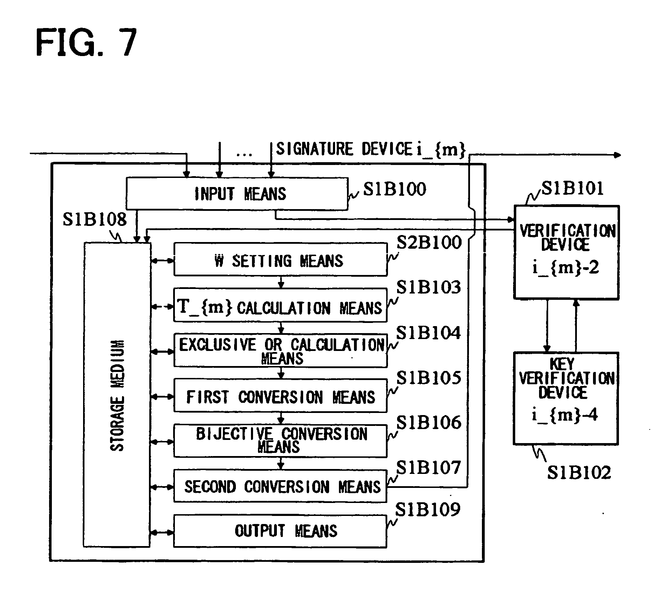

Referring to FIG. 7, the signature device i_{m} comprises input means S1B100, T_{m} calculation means S1B103, exclusive OR calculation means S1B104, first conversion means S1B105, bijective conversion means S1B106, second conversion means S1B107, a storage medium S1B108, output means S1B109, and w setting means S2B100. Other signature devices have the same configuration as the signature device i_{m}.

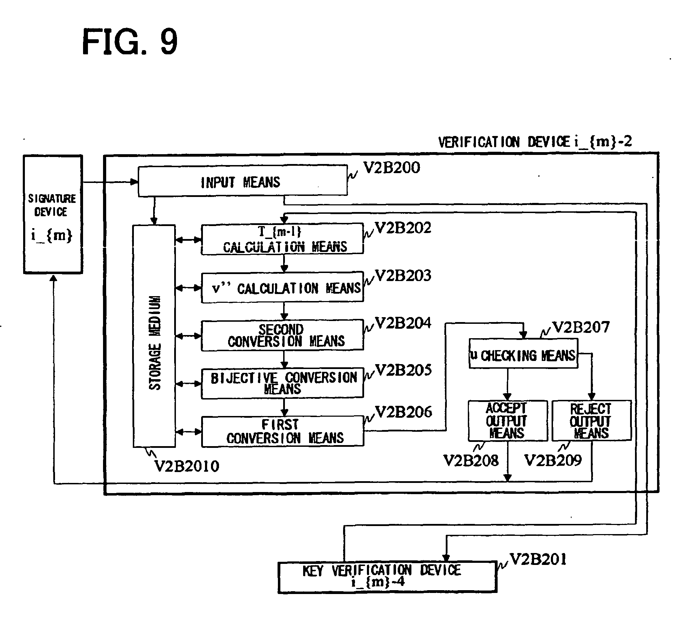

Referring to FIG. 9, the verification device i_{m}-2 comprises input means V2B200, T_{m-1} calculation means V2B202, v" calculation means V2B203, second conversion means V2B204, bijective conversion means V2B205, first conversion means V2B206, u checking means V2B207, accept output means V2B208, reject output means V2B209, and a storage medium V2B2010. Other verification devices have the same configuration as the verification device i_{m}-2.

The following describes the overview of this embodiment. First, the public key/private key pair of the signature device i_{1}, an initial value u_{i_{0}}, and a message M_{1} are entered into the signature device i_{1}. The signature device i_{1} uses u_{i_{0}} to create a signed text u_{i_{1}} for the message M_{1}, creates auxiliary information w_{i_(1}} from the initial value u_{i_{0}}, and outputs the pair of u_{i_{1}} and w_{i_{1}}. Next, the public key/private key pair of the signature device i_{2}, the pair of u_{i_{1}} and w_{i_{1}}, and a message M_{2} are entered into the signature device i_{2}. The signature device i_{2} uses u_{i_{1}} to create a signed text u_{i_{2}} for the message M_{2}, creates auxiliary information w_{i_{2}} from u_{i_{1}}, and outputs the pair of u_{i_{2}} and w_{i_{2}}. In the same manner, the public key/private key pair of the signature device i_{j}, the signed text u_{i_{j-1}} and the auxiliary information w_{i_{j-1}} that are output by the immediately preceding signature device, and a message M_{j} are entered sequentially into the signature device i_{j}, and the signature device i_{j} uses them to create the pair of a signed text u_{i_{j}} and auxiliary information w_{i_{j}}. u_{i_{j}}, which is the same signed text as that in the first embodiment, is data representing that the signature device i_{1} signs the message M_{1}, the signature device i_{2} signs the message M_{2}, ..., and the signature device i_{j} signs the message M_{j}.

w_{i_{j} } is auxiliary information that makes the verification of signed text u_{i_{j}} easy and, in this embodiment, the auxiliary information is the signed text u_{i_{j-1} } that is the input to the signature device i_{j}. For each j, when the public keys of the signature devices i_{1}, ..., i_{j}, the messages M_{1}, ..., M_{j-1}, and u_{i_{j-1} } and w_{i_{j-1}} are entered into the verification device i_{j}, the verification, device i_{j} verifies if u_{i_{j-1}} is a signed text, created for the messages M_{1}, ..., M_{j-1} } using the public keys of the signature devices i_{1}, ..., i_{j-1}, based on the auxiliary information w_{i_{j-1}}.

As in the first embodiment, the goal of the system in this embodiment is to create a signed text u_{i_{m} }, that is, data representing that the signature device i_{1} signs the message M_{1}, the signature device i_{2} signs the message M_{2}, ..., and the signature device i_{m} signs the message M_{m}.

Note that, as in the first embodiment, there is no need to know the number of signature devices, m, when the operation of the system in this embodiment is started. The number of signature devices, m, may be dynamically changed during the operation. The signature devices i_{1}, ..., i_{m} perform the same operation. The verification devices, the public key storage devices, the key validity verification devices, and the private key storage devices also perform basically the same operation.

Next, the following describes the detail of this embodiment with focus on the difference from the first embodiment.

The public key pk_{i} and the private key sk_{i} of the signature device i_{j} are created in the same way as in the first embodiment. For each of j=1, ..., m, the private key storage device i_{j}-5 stores the private key sk_{i_{j}}, and the public key storage device i_{j}-3 stores the public keys Pk_{1}, ..., pk_{m}.

The key validity verification device performs the same operation as in the first embodiment.

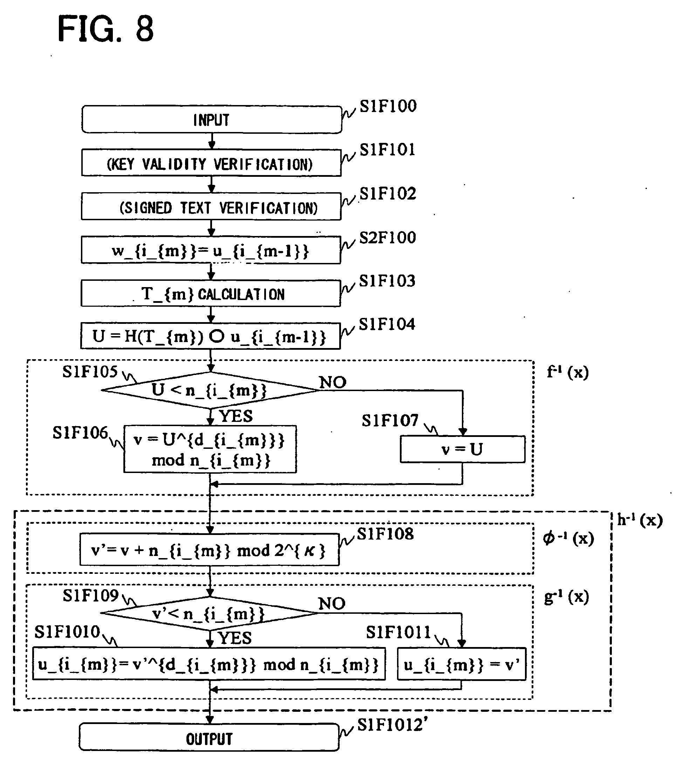

The method, which is used by the signature device i_{m} to sign the message M_{m} when the messages M_{1}, ..., M_{m}, the signed text u_{i_{m-1}} created by the signature devices I_(I), ..., , i_{m-1} for the messages M_{1}, ..., M_{m-1} using the public keys pk_{i_{1}}, ..., pk_{i_{m-1}}, and the auxiliary information w_{i_m-1}} are entered into the signature device i_{m}, is similar to that of the first embodiment except that the procedure for creating the auxiliary information is added. The following describes this method with reference to FIG. 7 and FIG. 8. In this embodiment, the signature device i_{m} calculates $w\_{i\_{m}}=u\_{i\_{m-1}}$ after the processing in step S1F102 via the w setting means S2B100 and writes the calculation result into the storage medium S1B108 (S2F100). The auxiliary information $w\_{i\_{m}}$ written into the storage medium S1B108, as well as the signed text $u\_{i\_{m}}$, create according to the same procedure as that of the first embodiment and written into the storage medium S1B108, is read by the output means S1B109 and is output (S1F10102').

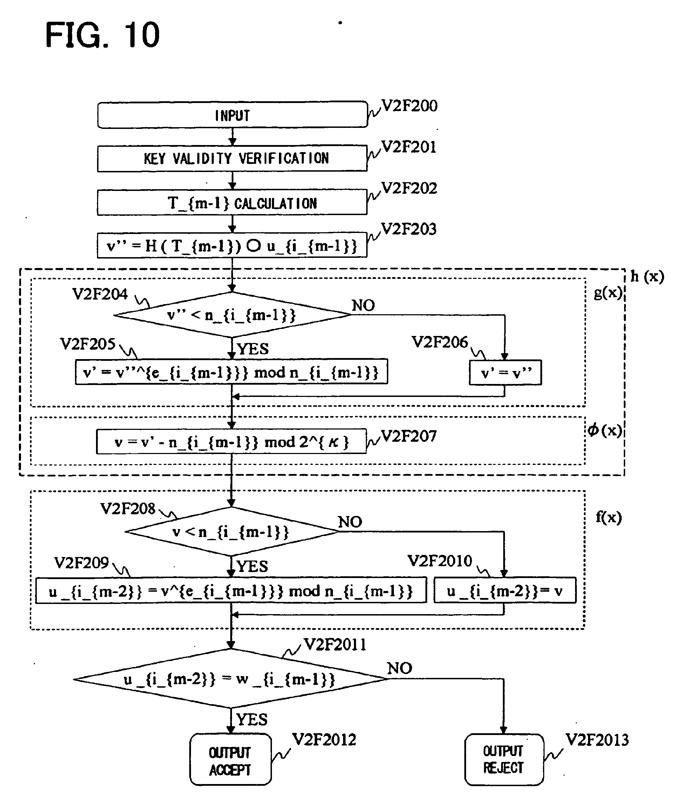

Next, with reference to FIG. 9 and FIG. 10, the following describes the method used by the verification device i_{m}-2 to verify the signed text u_{m-1}.

First, via the input means V2B200, the verification device i_{m}-2 reads $pk\_{i\_{1}}$, ..., $pk\_{i\_{m-1}}$ from the public key storage device i_{m}-3, reads the messages $M\_{1}$, ..., M-{m-1}, and saves them into the storage medium V2B2010 (V2F200).

Next, via the input means V2B200, the verification device i_{m}-2 sends $pk\_{i\_{1}}$, ..., $pk\_{i\_{m-1}}$ to the key verification device i_{m}-4 and requests it to verify the validity of the public keys $pk\_{i\_{1}}$, ..., $pk\_{i\{m-1\}}$ (V2F201).

Next, via the T_{m-1} calculation means V2B202, the verification device i_{m}-2 reads necessary data from the storage medium V2B2010, calculates $T\_{m-1} = M\_{1}\|...\|M\_{m-1}\|pk\_{i\_{1}}\|...\|pk\_{i\_{m-1}}$. and saves the calculation result T_{m-1} into the storage medium V2B2010 (V2F202).

Next, via the v" calculation means V2B203, the verification device i_{m}-2 reads necessary data from the storage medium V2B2010, calculates $v''=H(T\_{m-1}) \bigcirc u\_{i\_{m-1}}$, and saves the calculation result v" into the storage medium V2B2010 (V2F203).

Next, via the second conversion means V2B204, the verification device i_{m}-2 reads necessary data from the storage medium V2B2010 and checks if $v''<n\_{i\_{m-1}}$ (V2F204). If $v''<n\_{i\_{m-1}}$, the verification device i_{m}-2 calculates $v'=v''^{e\_{i\_{m-1}}} \bmod n\_{i\_{m-1}}$ via second conversion means V2B204 and saves the calculation result v' into the storage medium V2B2010 (V2F205). On the other hand, if $v''<n\_{i\_{m-1}}$ is not satisfied, the verification device i_{m}-2 performs the calculation with v'=v" and saves the calculation result v' into the storage medium V2B2010 (V2F206).

Next, via the bijective conversion means V2B205, the verification device i_{m}-2 reads necessary data from the storage medium V2B2010, calculates $v=v'-n\_{i\_{m-1}} \bmod 2^{\kappa}$, and saves the calculation result v into the storage medium V2B2010 (V2F207).

Next, via the first conversion means V2B206, the verification device i_{m}-2 reads necessary data from the storage medium V2B2010 and checks if $v<n\_{i(m-1)}$ (V2F208). If $v<n\_{i-{m-1}}$, the verification device i_{m}-2 calculates $u\_{i\_{m-2}}=v^{e\_{i\_{m-1}}} \bmod n\_{i\_{m-1}}$ via the first conversion means V2B206 and saves the calculation result $u\_{i\_{m-2}}$ into the storage medium V2B2010 (V2F209). On the other hand, if $u\_{i\_{m-2}}<n\_{i\_{{m-1}}}$ is not satisfied, the verification device i_{m}-2 performs the calculation with $u\_{i\_{m-1}}=v$ and saves the calculation result $u\_{i\_{m-2}}$ into the storage medium V2B2010 (V2F2010).

Next, via the u checking means V2B2007, the verification device i_{m}-2 reads necessary data from the storage medium V2B2010 and checks if $u\_{i\_{m-2}}=w\_{i\_{m-1}}$ (V2F2011). If $u\_{i\_{m-2}}=w\_{i\_{m-1}}$, the verification device i_{m}-2 outputs accept via the accept output means V2B208 (V2F2012); otherwise, the verification device i_{m}-2 outputs reject via the reject output means V2B209 (V2F2013).

Next, the following describes the effects of this embodiment.

The first effect is that the signature length does not depend on the number of signature devices. The reason is that the number of bits of the data before being signed is equal to the number of bits of the data after being signed. However, the data is longer than that in the first embodiment by the length of the auxiliary information.

The second effect is that the calculation amount required for the verification calculation is less than that in the first embodiment. The reason is that, while the first embodiment requires the verification calculation proportional to the number of signature devices that have signed because the initial value must finally be obtained, this embodiment is required to perform verification calculation only for one signature device because the signed text that is input to the immediately preceding signature device is passed as the auxiliary information. Note that this embodiment assumes that the immediately preceding signature device is reliable. Therefore, the safety of this embodiment is lower than that of the first embodiment that assures safety without such an assumption.

The other effects of the first embodiment are also achieved.

Although the signed text $u\_{i\_{j-1}}$ that is input to the signature device i_{j} is used as the auxiliary information $w\_{i\_{j}}$, which is paired with the signed text $u\_{i\_{j}}$, in this embodiment, it is also possible that the hash value $h(u\_{i\_{j-1}})$ of $u\_{i\_{j-1}}$ is used as the auxiliary information $w\_{i\_{j}}$ where h is a predetermined hash function that outputs a hash value of the same number of bits as that of the input. The additional changes that are made to the first embodiment are also possible in this embodiment.

While the preferred embodiments of the present invention have been described, it is to be understood that the present invention is not limited to the embodiments but various additional changes are possible. The function of the signature device and the verification device of the present invention can be implemented not only by hardware but also by a computer program. The program, recorded in a computer readable recording medium such as a magnetic disk or semiconductor memory for distribution, is read by a computer when the computer is started. The operation of the computer is controlled to allow the computer to function as the signature device and the verification device described in the embodiments.

**Claims**

1.   A signature method comprising the steps of:

a) receiving, by input means, an initial value or a signed text $u_{i\{m-1\}}$, which is created by other plurality of signature devices that sequentially perform a signature operation, and messages $M_{\{1\}}$, ..., $M_{\{m-1\}}$ entered into the signature devices, and saving the initial value or the signed text and the messages into a storage medium;

b) calculating, by $T_{\{m\}}$ calculation means, $T_{\{m\}}= M_{\{1\}} \|...\| M_{\{m\}} \| pk_{\{i\_\{1\}\}} \|... \| pk_{\{i\text{-}\{m\}\}}$, where $pk_{\{i\_\{j\}\}}$ is a public key of a signature device $i\_\{j\}$ and $\|$ is a concatenation of bit strings, based on data the $T_{\{m\}}$ calculation means read from said storage medium and a public key storage device, and saving the calculation result into said storage medium;

c) calculating, by exclusive OR calculation means, , $U=H(T_{\{m\}}) \bigcirc u_{\_(i\_\{m-1\}\}}$, where H is a hash function and $\bigcirc$is an exclusive OR, based on data the exclusive OR calculation means read from said storage medium, and saving the calculation result Into said storage medium;

d) calculating , by first conversion means, $v=u \wedge \{d_{\{i\text{-}\{m\}\}} \bmod n_{\{i\_\{m\}\}}$, if $U<n_{\{i\_\{m\}\}}$, where $n_{\{i\_\{m\}\}}$ is an RSA modulus of said signature device, and calculating $v=U$ if $U \geq n_{\{i\_\{m\}\}}$, based on data the first conversion means reads from said storage medium, and saving the calculation result into said storage medium;

e) calculating, by bijective conversion means, $v'\text{-}v+n_{\{i\_\{m\}\}} \bmod 2 \wedge \{\kappa\}$, where $\kappa$ is a security parameter, based on data the bijective conversion means reads from said storage medium and saving the calculation result into the storage medium;

f) calculating, by second conversion means, $u_{\{i\_\{m\}\}}=v' " \{d_{\{i\_\{m\}\}}\} \bmod n_{\{i\_\{m\}\}}$, if $v'<n_{\{i\_\{m\}\}}$, or $u_{\{i\_\{m\}\}}=v'$ if $v' \geq n_{\{i\_\{m\}\}}$, based on data the second conversion means reads from said storage medium, and saving the calculation result into said storage medium; and

g) reading $u_{\{i\_\{m\}\}}$ from said storage medium, by output means, and outputting $u_{\{i\_\{m\}\}}$ as the signed text.

2.   The signature method according to claim 1, further comprising the step of:

calculating, by w setting means, $w_{\{i\_\{m\}\}}=u_{\{i\_\{m-1\}\}}$ or $w_{\{i\_\{m\}\}} = h(u_{\{i\_\{m-1\}\}})$ where h is a hash function and saving the calculation result into said storage medium, wherein the created signed text $u_{\{i\_\{m\}\}}$, which is paired with the calculated $w_{\{i\_\{m\}\}}$, is output with $w_{\{i\_\{m\}\}}$ as auxiliary information.

3.   A verification method comprising the steps of:

a) receiving, by input means, a signed text $u_{\{i\_\{m-1\}\}}$, which is created by one or more other signature devices that sequentially perform a signature operation, messages $M_{\{1\}}$, ... , $M_{\{m-1\}}$ entered into the signature devices, and public keys $pk_{\{i\_\{1\}\}}$, ..., $pk_{\{i\_\{m-1\}\}}$ and saving the signed text, the messages, and the public keys into a storage medium;

b) setting, by j initialization means, m-1 in a variable j;

c)calculating, by second conversion means, $v'=u_{\{i\_\{j\}\}} \wedge \{e_{\{i\_\{j\}\}}\} \bmod n_{\{L\{j\}\}}$, if $u_{\{i\_\{j\}\}} < n_{\{L\{j\}\}}$, or $v'=u_{\{i\_\{j\}\}}$ if $u_{\{i\_\{j\}\}} \geq n_{\{i\_\{j\}\}}$, based on data the second conversion means reads from said storage medium, and saving the calculation result into said storage medium;

d) calculating, by bijective calculation means, $v=v'\text{-}n_{\{i\_\{m\}\}} \bmod 2^{\{\kappa\}}$, based on data the bijective calculation means reads from said storage medium, and saving the calculation result into said storage medium;

e) calculating, by first conversion means, $U=v^{\wedge} \{e_{\{i\_\{j\}\}}\} \bmod n_{\{i\_\{j\}\}}$, if $v<n_{\{i\_\{j\}\}}$, or $U=v$ if $v \geq n_{\{i\_\{j\}\}}$, based on data the first conversion means reads from said storage medium, and saving the calculation result into said storage medium;

f) repeating, by said second conversion means, said bijection calculation means, and said first conversion means, the steps each time the variable j is decremented by one until the variable j reaches 0;

g) calculating, by $T_{\{j\}}$ calculation means, $T_{\{j\}}=M_{\{1\}} \|...\| M_{\{j\}} \| pk_{\{i\_\{1\}\}} \| ... \| pk_{\{i\text{-}\{j\}\}}$, based on data the by $T_{\{j\}}$ calculation means reads from said storage medium, and saving the calculation result into said storage medium;

h) calculating, by u calculation means, $u_{i_{j-1}} = H(T_{j}) \bigcirc U$, based on data the u calculation means reads from said storage medium, and saving the calculation result into said storage medium;

i) checking, by u checking means, if u is a predetermined initial value; and

j) outputting, by output means, a verification success notification if u is the predetermined initial value and, if not, outputting a verification failure notification.

**4.** A signature device comprising:

a readable/writable storage medium;

input means adapted to receive an initial value or a signed text $u_{i_{m-1}}$, which is created by other plurality of signature devices that sequentially perform a signature operation, and messages $M_{1}$, ..., $M_{m-1}$ entered into the signature devices and to save the initial value or the signed text and the messages into said storage medium;

$T_{m}$ calculation means adapted to calculate $T_{m}=M_{1} \|...\| M_{m} \| pk_{L_{1}} \|...\| pk_{i_{m}}$ where $pk_{i_{j}}$ is a public key of a signature device $i_{j}$ and $\|$ is a concatenation of bit strings, based on data read by the $T_{m}$ calculation means from said storage medium and a public key storage device, and to save the calculation result into said storage medium;

exclusive GR calculation means adapted to calculate $U=H(_{T}_{m}) \bigcirc u_{i_{m-1}}$ where H is a hash function and $\bigcirc$ is an exclusive OR, based on data read by the exclusive OR calculation means from said storage medium, and to save the calculation result into said storage medium;

first conversion means adapted to calculate $v=u^{d_{i_{m}}} \bmod n_m$ if $U<n_{i_{m}}$ where $n_{i_m}$ is an RSA modulus of said signature device, or that calculates $v=U$ if $U \geq n_{i_{m}}$, based on data read by the first conversion means from said storage medium, and to save the calculation result into said storage medium;

bijective conversion means adapted to calculate $v'=v+n_{i_{m}} \bmod 2^{\kappa}$ where $\kappa$ is a security parameter, based on data read by the bijective conversion means from said storage medium, and to save the calculation result into the storage medium;

second conversion means adapted to calculate $u_{i_{m}}=v'^{d_{1m}} \bmod n_{i_{m}}$ if $v'<n_{i_{m}}$, and that calculates $u_{i_{m}}=v'$ if $\geq v' n_{i_{m}}$, based on data read by the second conversion means from said storage medium, and to save the calculation result into said storage medium; and

output means adapted to read $u_{i_{m}}$ from said storage medium and outputs $u_{i_{m}}$ as the signed text.

**5.** The signature device according to claim 4, further comprising w setting means adapted to calculate $w_{i_{m}}=u_{i_{m-1}}$ or $w_{i_{m}}=h(u_{i_{m-1}})$ where h is a hash function and to save the calculation result into said storage medium, wherein the created signed text $u_{i_{m}}$, which is paired with the calculated $w_{i_{m}}$, is output with $w_{i_{m}}$ as auxiliary information.

**6.** A verification device comprising:

a readable/writable storage medium:

input means adapted to read a signed text $u_{i_{m-1}}$, which is created by one or more other signature devices that sequentially perform a signature operation, messages $M_{1}$, ..., $M_{m-1}$ entered into the signature devices, and public keys $pk_{i_{1}}$, ..., $pk_{i_{m-1}}$ and to save the signed text, the messages, and the public keys into said storage medium; j initialization means that sets m-1 in a variable j;

second conversion means adapted to calculate $v'=u_{i_{j}}^{e_{i_{j}}} \bmod n_{i_{j}}$ if $u_{i_{j}} < n_{i_{j}}$, and to calculate $v'=u_{i_{j}}$ if $u_{i_{j}} \geq n_{i_{j}}$, based on data read by the second conversion means from said storage medium, and to save the calculation result into said storage medium;

bijective calculation means adapted to calculate $v=v'-n_{i_{m}} \bmod 2^{\kappa}$, based on data read by the bijective calculation means from said storage medium, and to save the calculation result into said storage medium;

first conversion means adapted to calculate $u=v^{e_{i_{j}}} \bmod n_{i_{j}}$ if $v < n_{i_{j}}$, and that calculates $U=v$ if $v \geq n_{i_{j}}$, based on data read by the first conversion means from said storage medium, and to save the calculation result into said storage medium;

$T_{j}$ calculation means adapted to calculate $T_{j}=M_{1} \|...\| M_{j} \| pk_{i_{1}} \|...\| pk_{i_{j}}$, based on data read by the $T_{j}$ calculation means from said storage medium, and to save the calculation result into said storage medium after said second conversion means, said bijection calculation means, and said first conversion means repeat the steps each time the variable j is decremented by one until the variable j reaches 0;

u calculation means adapted to calculate $u_{i_{j-1}}=H(T_{j}) \bigcirc U$, based on data read by the first conversion means from said storage medium, and to save the calculation result into said storage medium;

u checking means adapted to check if u is a predetermined initial value; and

output means adapted to output a verification success notification if u is the predetermined initial value and, if not, to output a verification failure notification.

7. A program that causes a computer having a readable/writable storage medium to function as:

input means that receives an initial value og a signed text $u_{i_{m-1}}$, which is created by other plurality of signature devices that sequentially perform a signature operation, and messages $M_{1}$, ..., $M_{m-1}$ entered into the signature devices and saves the initial value or the signed text and the messages into said storage medium;

$T_{m}$ calculation means that calculates $T_{m} = M_{1} \|...\| M_{m} \| pk_{i_{1}}\{\} \|... \| pk_{i_{m}}$ where $pk_{i_{j}}$ is a public key of a signature device $i_{j}$ and $\|$ is a concatenation of bit strings, based on data read by the $T_{m}$ calculation means from said storage medium, and that saves the calculation result into said storage medium;

exclusive OR calculation means that calculates $U = H(T_{m}) \bigcirc u_{i_{m-1}}$ where H is a hash function and $\bigcirc$ is an exclusive OR, based on data read by the exclusive OR calculation means from said storage medium, and that saves the calculation result into said storage medium;

first conversion means that calculates $v = u^{d_{i_{m}}} \bmod n_{i_{m}}$ if $U < n_{i-{m}}$ where $n_{i_m}$ is an RSA modulus of said signature device, and that calculates $v = U$ if $U \geq n_{i_{m}}$, based on data read by the first conversion means from said storage medium, and that saves the calculation result into said storage medium;

bijective conversion means that calculates $v' = v + n_{i_{m}} \bmod 2^{\kappa}$ where $\kappa$ is a security parameter, based on data read by the bijective conversion means from said storage medium, and that saves the calculation result into the storage medium;

second conversion means that calculates $u_{i_{m}} = v'^{d_{i_{m}}} \bmod n_{i_{m}}$ if $v' < n_{i_{m}}$, and that calculates $u_{i_{m}} = v'$ if $v' \geq n_{i_{m}}$, based on data read by the second conversion means from said storage medium, and that saves the calculation result into said storage medium; and

output means that reads $u_{i_{m}}$ from said storage medium and outputs $u_{i_{m}}$ as the signed text.

8. The program according to claim 7, further causing the computer to function as a w setting means that calculates $w_{i_{m}} = u_{i_{m-1}}$ or $w_{i_{m}} = h(u_{i_{m-1}})$ where h is a hash function and saves the calculation result into said storage medium, wherein the created signed text $u_{i_{m}}$, which is paired with the calculated $w_{i_{m}}$, is output with $w_{i_{m}}$ as auxiliary information.

9. A program that causes a computer having a readable/writable storage medium to function as:

input means that reads a signed text $u_{i_{m-1}}$, which is created by one or more other signature devices that sequentially perform a signature operation, messages $M_{1}$, ..., $M_{m-1}$ entered into the signature devices, and public keys $pk_{i_{1}}$, ..., $pk_{i_{m-1}}$ and saves the signed text, the messages, and the public keys into said storage medium; j initialization means that sets m-1 in a variable j;

second conversion means that calculates $v' = u_{i_{j}}^{e_{i_{j}}} \bmod n_{i_{j}}$ if $u_{i_{j}} < n_{i_{j}}$, and that calculates $v' = u_{i_{i}}$ if $u - {i_{j}} \geq n_{i-{j}}$, based on data read by the second conversion means from said storage medium, and that saves the calculation result into said storage medium;

bijective calculation means that calculates $v = v' - n_{i_{m}} \bmod 2^{\kappa}$, based on data read by the bijective calculation means from said storage medium, and that saves the calculation result into said storage medium:

first conversion means that calculates $U = v^{e_{i_{j}}} \bmod n_{i_{j}}$ if $v < n_{i_{j}}$, and that calculates $U = v$ if $v$ $n_{i_{j}}$, based on data read by the first conversion means from said storage medium, and that saves the calculation result into said storage medium;

$T_{j}$ calculation means that calculates $T_{j} = M_{1} \|...\| M_{j} \| pk_{i_{1}} \| ... \| pk_{i_{i}}$, based on data read by the $T_{j}$ calculation means from said storage medium, and that saves the calculation result into said storage medium after said second conversion means, said bijection calculation means, and said first conversion means repeat the steps each time the variable j is decremented by one until the variable j reaches 0;

u calculation means that calculates $u_{i_{j-1}} = H(T_{j}) \bigcirc U$, based on data read by the u calculation means from said storage medium, and that saves the calculation result into said storage medium;

u checking means that checks if u is a predetermined initial value; and

output means that outputs a verification success notification if u is the predetermined initial value and, if not, outputs a verification failure notification.

10. A system comprising the signature device of claim 4, and the verification device of claim 6.

**Patentansprüche**

1.  Signaturverfahren, das die folgenden Schritte beinhaltet:

    a) Empfangen, über Eingabemittel, eines Anfangswertes oder eines signierten Texts $u_{i_{m-1}}$, der durch eine andere Mehrzahl von Signaturgeräten erzeugt wurde, die sequentiell einen Signaturvorgang durchführen, und von in die Signaturgeräte eingegebenen Nachrichten $M_{1}$, ..., $M_{m-1}$, und Speichern des Anfangswertes oder des signierten Texts und der Nachrichten in einem Speichermedium;
    b) Berechnen, mit $T_{m}$ Rechenmitteln, von $T_{m}= M_{1}\|...\| M_{m}\| pk_{i_{1}}\|...\| pk_{i_{m}}$, wobei $pk_{i_{j}}$ ein öffentlicher Schlüssel eines Signaturgerätes $i_{j}$ und $\|$ eine Verkettung von Bitstrings ist, auf der Basis von Daten, die die $T_{m}$ Rechenmittel aus dem genannten Speichermedium und einem Gerät zum Speichern eines öffentlichen Schlüssels auslesen, und Speichern des Rechenergebnisses in dem genannten Speichermedium;
    c) Berechnen, mit Exklusiv-ODER-Rechenmitteln, von $U=H(T_{m})$ O $u$-$(i$-$_{m-1})$, wobei H eine Hash-Funktion und O ein Exklusiv-ODER ist, auf der Basis von Daten, die die Exklusiv-ODER-Rechenmittel aus dem genannten Speichermedium auslesen, und Speichern des Rechenergebnisses in dem genannten Speichermedium;
    d) Berechnen, mit ersten Konvertierungsmitteln, von $v=u^{d-i_{m}} \bmod n_{i_{m}}$, wenn $U<n_{i_{m}}$, wobei $n_{i_{m}}$ ein RSA-Modulus des genannten Signaturgeräts ist, und Berechnen von $v=U$, wenn $U \geq n_{i_{m}}$, auf der Basis von Daten, die die ersten Konvertierungsmittel aus dem genannten Speichermedium auslesen, und Speichern des Rechenergebnisses in dem genannten Speichermedium;
    e) Berechnen, mit bijektiven Konvertierungsmitteln, von $v'=v+n_{i_{m}} \bmod 2^{\kappa}$, wobei $\kappa$ ein Sicherheitsparameter ist, auf der Basis von Daten, die die bijektiven Konvertierungsmittel aus dem genannten Speichermedium auslesen, und Speichern des Rechenergebnisses in dem Speichermedium;
    f) Berechnen, mit zweiten Konvertierungsmitteln, von $u_{i_{m}}=v'^{d_{i_{m}}} \bmod n_{i_{m}}$, wenn $v'<n_{i_{m}}$, oder von $u_{i_{m}}=v'$, wenn $v' \geq n_{i_{m}}$, auf der Basis von Daten, die die zweiten Konvertierungsmittel aus dem genannten Speichermedium auslesen, und Speichern des Rechenergebnisses in dem genannten Speichermedium; und
    g) Lesen von $u_{i_{m}}$ aus dem genannten Speichermedium mit Ausgabemitteln und Ausgeben von $u_{i_{m}}$ als signierten Text.

2.  Signaturverfahren nach Anspruch 1, das ferner den folgenden Schritt beinhaltet:

    Berechnen, mit w Einstellmitteln, von $w_{i_{m}}=u_{i_{m-l}}$ oder $w_{i_{m}}= h\{u_{i_{m-1}}\}$, wobei h eine Hash-Funktion ist, und Speichern des Rechenergebnisses in dem genannten Speichermedium, wobei der erzeugte signierte Text $u_{i_{m}}$ ist, der mit dem berechneten $w_{i_{m}}$ gepaart ist, mit $w_{i_{m}}$ als Zusatzinformation ausgegeben wird.

3.  Verifizierungsverfahren, das die folgenden Schritte beinhaltet:

    a) Empfangen, über Eingabemittel, eines signierten Texts $u_{i_{m-1}}$, der mit einem oder mehreren weiteren Signaturgeräten erzeugt wird, das/die sequentiell einen Signaturvorgang ausführen, von in die Signaturgeräte eingegebenen Nachrichten $M_{1}$, ..., $M_{m-1}$ und von öffentlichen Schlüsseln $pk_{i_{1}}$, ..., $pk_{i_{m-1}}$, und Speichern des signierten Texts, der Nachrichten und der öffentlichen Schlüssel in einem Speichermedium;
    b) Einstellen, mit j Initialisierungsmitteln, von m-1 in einer Variablen j;
    c) Berechnen, mit zweiten Konvertierungsmitteln, von $v'=u_{i_{j}}^{e_{i_{j}}} \bmod n_{i_{j}}$, wenn $u_{i_{j}} < n_{i_{j}}$, oder von $v'=u_{i_{j}}$, wenn $u_{i_{j}} \geq n_{i_{j}}$, auf der Basis von Daten, die die zweiten Konvertierungsmittel aus dem genannten Speichermedium auslesen, und Speichern des Rechenergebnisses in dem genannten Speichermedium;
    d) Berechnen, durch bijektive Rechenmittel, von $v=v'-n_{i_{m}} \bmod 2^{\kappa}$ auf der Basis von Daten, die die bijektiven Rechenmittel aus dem genannten Speichermedium auslesen, und Speichern des Rechenergebnisses in dem genannten Speichermedium;
    e) Berechnen, mit ersten Konvertierungsmitteln, von $U=v^{e_{i_{j}}} \bmod n_{i_{j}}$, wenn $v<n_{i_{j}}$, oder von $U=v$, wenn $v \geq n_{i_{j}}$, auf der Basis von Daten, die die ersten Konvertierungsmittel aus dem genannten Speichermedium auslesen, und Speichern des Rechenergebnisses in dem genannten Speichermedium;
    f) Wiederholen, mit den genannten zweiten Konvertierungsmittel, den genannten Bijektionsrechenmitteln und den genannten ersten Konvertierungsmitteln, der Schritte jedes Mal, wenn die Variable j um eins dekrementiert wird, bis die Variable j 0 erreicht;
    g) Berechnen, mit $T_{j}$ Rechenmitteln, von $T_{j}= M_{1}\|...\| M_{j}\| \rho k_{i_{1}}\|...\| \rho k_{i_{j}}$ auf der Basis von Daten, die die $T_{\{j\}}$ Rechenmittel aus dem genannten Speichermedium auslesen, und Speichern des Rechenergebnisses in dem genannten Speichermedium;

h) Berechnen, mit u Rechenmitteln, von $u_{\{i_{\{j-1\}}\}} = H(T_{\{j\}}) \, O \, U$ auf der Basis von Daten, die die u-Rechenmittel aus dem genannten Speichermedium auslesen, und Speichern des Rechenergebnisses in dem genannten Speichermedium;

i) Prüfen, mit u Prüfmitteln, ob u ein vorbestimmter Anfangswert ist; und

j) Ausgeben, mit Ausgabemitteln, einer Verifikationerfolgreich-Mitteilung, wenn u der vorbestimmte Anfangswert ist, und wenn nicht, Ausgeben einer Verifikation-erfolglos-Mitteilung.

**4.** Signaturgerät, das Folgendes umfasst:

ein lesbares/beschreibbares Speichermedium;

Eingabemittel zum Empfangen eines Anfangswertes oder eines signierten Texts $u_{\{i_{\{m-1\}}\}}$, der durch eine andere Mehrzahl von Signaturgeräten erzeugt wird, die sequentiell einen Signaturvorgang durchführen, und von in die Signaturgeräte eingegebenen Nachrichten $M_{\{1\}}, ..., M_{\{m-1\}}$, und zum Speichern des Anfangswertes oder des signierten Texts und der Nachrichten in dem genannten Speichermedium;

$T_{\{m\}}$ Rechenmittel zum Berechnen von $T_{\{m\}} = M_{\{1\}}\|...\| M_{\{m\}}\| pk_{\{i_{\{1\}}\}}\|...\| \rho k_{\{i_{\{m\}}\}}$, wobei $pk_{\{i_{\{j\}}\}}$ ein öffentlicher Schlüssel eines Signaturgerätes $i_{\{j\}}$ und $\|$ eine Verkettung von Bitstrings ist, auf der Basis von Daten, die von den $T_{\{m\}}$ Rechenmitteln aus dem genannten Speichermedium und einem Öffentlicher-Schlüssel-Speichergerät ausgelesen werden, und zum Speichern des Rechenergebnisses in dem genannten Speichermedium;

Exklusiv-ODER-Rechenmittel zum Berechnen von $U = H(T_{\{m\}}) \, O \, u_{\_}(i_{\{m-1\}})$, wobei H eine Hash-Funktion und O ein Exklusiv-ODER ist, auf der Basis von Daten, die von den Exklusiv-ODER-Rechenmitteln aus dem genannten Speichermedium ausgelesen werden, und zum Speichern des Rechenergebnisses in dem genannten Speichermedium;

erste Konvertierungsmittel zum Berechnen von $v = u^{\{d_{\{i_{\{m\}}\}}\}} \bmod n_m\}\}$, wenn $U < n_{\{i_{\{m\}}\}}$, wobei $n_{\{i_{\{m\}}\}}$ ein RSA-Modulus des genannten Signaturgeräts ist, oder zum Berechnen von $v = U$, wenn $U \geq n_{\{i_{\{m\}}\}}$, auf der Basis von Daten, die von den ersten Konvertierungsmitteln aus dem genannten Speichermedium ausgelesen werden, und zum Speichern des Rechenergebnisses in dem genannten Speichermedium;

bijektive Konvertierungsmittel zum Berechnen von $v' = v + n_{\{i_{\{m\}}\}} \bmod 2^{\{\kappa\}}$, wobei $\kappa$ ein Sicherheitsparameter ist, auf der Basis von Daten, die von den bijektiven Konvertierungsmitteln aus dem genannten Speichermedium ausgelesen werden, und zum Speichern des Rechenergebnisses in dem Speichermedium;

zweite Konvertierungsmittel zum Berechnen von $u_{\{i_{\{m\}}\}} = v'^{\{d_{\{i_{\{m\}}\}}\}} \bmod n_{\{i_{\{m\}}\}}$, wenn $v' < n_{\{i_{\{m\}}\}}$, und zum Berechnen von $u_{\{i_{\{m\}}\}} = v'$, wenn $\geq v' \, n_{\{i_{\{m\}}\}}$, auf der Basis von Daten, die von den zweiten Konvertierungsmitteln aus dem genannten Speichermedium ausgelesen werden, und zum Speichern des Rechenergebnisses in dem genannten Speichermedium; und

Ausgabemittel zum Auslesen von $u_{\{i_{\{m\}}\}}$ aus dem genannten Speichermittel und zum Ausgeben von $u_{\{i_{\{m\}}\}}$ als signierten Text.

**5.** Signaturgerät nach Anspruch 4, das ferner w Einstellmittel zum Berechnen von $w_{\{i_{\{m\}}\}} = u_{\{i_{\{m-1\}}\}}$ oder von $w_{\{i_{\{m\}}\}} = h\{u_{\{i_{\{m-1\}}\}}\}$ umfasst, wobei h eine Hash-Funktion ist, und zum Speichern des Rechenergebnisses in dem genannten Speichermedium, wobei der erzeugte signierte Text $u_{\{i_{\{m\}}\}}$, der mit dem berechneten $w_{\{i_{\{m\}}\}}$ gepaart ist, mit $w_{\{i_{\{m\}}\}}$ als Zusatzinformation ausgegeben wird.

**6.** Verifikationsvorrichtung, die Folgendes umfasst:

ein lesbares/beschreibbares Speichermedium;

Eingabemittel zum Lesen eines signierten Texts $u_{\{i_{\{m-1\}}\}}$, der von einem oder mehreren anderen Signaturgeräten erzeugt wird, die sequentiell einen Signaturvorgang durchführen, von in die Signaturgeräte eingegebenen Nachrichten $M_{\{1\}}, ..., M_{\{m-1\}}$ und von öffentlichen Schlüsseln $\rho k_{\{i_{\{1\}}\}}, ... \rho k_{\{i_{\{m-1\}}\}}$, und zum Speichern des signierten Texts, der Nachrichten und der öffentlichen Schlüssel in dem genannten Speichermedium;

j Initialisierungsmittel, die m-1 in einer Variablen j einstellen;

zweite Konvertierungsmittel zum Berechnen von $v' = u_{\{i_{\{j\}}\}}^{\{e_{\{i_{\{j\}}\}}\}} \bmod n_{\{i_{\{j\}}\}}$, wenn $u_{\{i_{\{j\}}\}} < n_{\{i_{\{j\}}\}}$, und zum Berechnen von $v' = u_{\{i_{\{j\}}\}}$, wenn $u_{\{i_{\{j\}}\}} \geq n_{\{i_{\{j\}}\}}$, auf der Basis von Daten, die von den zweiten Konvertierungsmitteln aus dem genannten Speichermedium ausgelesen werden, und zum Speichern des Rechenergebnisses in dem genannten Speichermedium;

bijektive Rechenmittel zum Berechnen von $v = v' - n_{\{i_{\{m\}}\}} \bmod 2''\{\kappa\}$ auf der Basis von Daten, die von den bijektiven Rechenmitteln aus dem genannten Speichermedium ausgelesen werden, und zum Speichern des Rechenergebnisses in dem genannten Speichermedium;

erste Konvertierungsmittel zum Berechnen von $U=v^{e_{i_{j}}} \mod n_{i_{j}}$, wenn $v < n_{i_{j}}$, und zum Berechnen von $U=v$, wenn $v \geq n_{i_{j}}$, auf der Basis von Daten, die von den ersten Konvertierungsmitteln aus dem genannten Speichermedium ausgelesen werden, und zum Speichern des Rechenergebnisses in dem genannten Speichermedium;

$T_{j}$ Rechenmittel zum Berechnen von $T_{j}= M_{1}\|...\| M_{j}\| pk_{i_{1}}\|...\| pk_{i_{j}}$ auf der Basis von Daten, die von den $T_{j}$ Rechenmitteln aus dem genannten Speichermedium ausgelesen werden, und zum Speichern des Rechenergebnisses in dem genannten Speichermedium, wenn die genannten zweiten Konvertierungsmittel, die genannten Bijektionsrechenmittel und die genannten ersten Konvertierungsmittel die Schritte jedes Mal wiederholen, wenn die Variable j um eins dekrementiert wird, bis die Variable j 0 erreicht;

u Rechenmittel zum Berechnen von $u_{i_{j-1}}=H(T_{j})$ O $U$ auf der Basis von Daten, die von den ersten Konvertierungsmitteln aus dem genannten Speichermedium ausgelesen werden, und zum Speichern des Rechenergebnisses in dem genannten Speichermedium;

u Prüfmittel zum Prüfen, ob u ein vorbestimmter Anfangswert ist; und

Ausgabemittel zum Ausgeben einer Verifikationerfolgreich-Mitteilung, wenn u der vorbestimmte Anfangswert ist, und wenn nicht, Ausgeben einer Verifikation-erfolglos-Mitteilung.

7.  Programm, das bewirkt, dass ein Computer mit einem lesbaren/beschreibbaren Speichermedium die folgenden Funktionen hat:

Eingabemittel, die einen Anfangswert oder einen signierten Text $u_{i_{m-1}}$, der von einer anderen Mehrzahl von Signaturgeräten erzeugt wird, die sequentiell einen Signaturvorgang durchführen, und in die Signaturgeräte eingegebene Nachrichten $M_{1}$, ..., $M_{m-1}$ empfangen und den Anfangswert oder den signierten Text und die Nachrichten auf dem genannen Speichermedium speichern;

$T_{m}$ Rechenmittel, die $T_{m} = M_{1}\|...\| M_{m}\| pk_{i_{1}}\|...\| pk_{i_{m}}$, wobei $pk_{i_{j}}$ ein öffentlicher Schlüssel eines Signaturgerätes $i_{j}$ und $\|$ eine Verkettung von Bitstrings ist, auf der Basis von Daten berechnen, die von den $T_{m}$ Rechenmitteln aus dem genannten Speichermedium ausgelesen werden, und das Rechenergebnis in dem genannten Speichermedium speichern;

Exklusiv-ODER-Rechenmittel, die $U=H(T_{m})$ O $u_{(i_{m-1})}$, wobei H eine Hash-Funktion und O ein Exklusiv-ODER ist, auf der Basis von Daten berechnen, die von den Exklusiv-ODER-Rechenmitteln aus dem genannten Speichermedium ausgelesen werden, und das Rechenergebnis in dem genannten Speichermedium speichern;

erste Konvertierungsmittel, die $v=u^{d_{i_{m}}} \mod n_{i_{m}}$ berechnen, wenn $U < n_{i_{m}}$, wobei $n_{i_{m}}$ ein RSA-Modulus des genannten Signaturgeräts ist, und $v=U$ berechnen, wenn $U \geq n_{i_{m}}$, auf der Basis von Daten, die von den ersten Konversionsmitteln aus dem genannten Speichermedium ausgelesen werden, und das Rechenergebnis in dem genannten Speichermedium speichern;

bijektive Konvertierungsmittel, die $v'=v+n_{i_{m}} \mod 2^{\kappa}$, wobei $\kappa$ ein Sicherheitsparameter ist, auf der Basis von Daten berechnen, die von den bijektiven Konvertierungsmitteln aus dem genannten Speichermedium ausgelesen werden, und das Rechenergebnis in dem Speichermedium speichern;

zweite Konvertierungsmittel, die $u_{i_{m}}=v'^{d_{i_{m}}} \mod n_{i_{m}}$ berechnen, wenn $v' < n_{i_{m}}$, und $u_{i_{m}}=v'$ berechnen, wenn $v' \geq n_{i_{m}}$, auf der Basis von Daten, die von den zweiten Konvertierungsmitteln aus dem genannten Speichermedium ausgelesen werden, und das Rechenergebnis in dem genannten Speichermedium speichern; und

Ausgabemittel, die $u_{i_{m}}$ aus dem genannten Speichermedium auslesen und $u_{i_{m}}$ als signierten Text ausgeben.

8.  Programm nach Anspruch 7, das ferner bewirkt, dass der Computer die Funktion von w Einstellmitteln erfüllt, die $w_{i_{m}}=u_{i_{m-1}}$ oder $w_{i_{m}}=h\{u_{i_{m-1}}\}$ berechnen, wobei h eine Hash-Funktion ist, und das Rechenergebnis in dem genannten Speichermedium speichern, wobei der erzeugte signierte Text $u_{i_{m}}$, der mit dem berechneten $w_{i_{m}}$ gepaart ist, mit $w_{i_{m}}$ als Zusatzinformation ausgegeben wird.

9.  Programm, das bewirkt, dass ein Computer mit einem lesbaren/beschreibbaren Speichermedium die folgenden Funktionen hat:

Eingabemittel, die einen signierten Text $u_{i_{m-1}}$, der von einem oder mehreren anderen Signaturgeräten erzeugt wird, die sequentiell einen Signaturvorgang durchführen, in die Signaturgeräte eingegebene Nachrichten $M_{1}$, ..., $M_{m-1}$ und öffentliche Schlüssel $pk_{i_{1}}$, ..., $pk_{i_{m-1}}$ einlesen und den signierten Text, die Nachrichten und die öffentlichen Schlüssel in dem genannten Speichermedium speichern;

j Initialisierungsmittel, die m-1 in einer Variablen j einstellen;

zweite Konvertierungsmittel, die $v'=u_{i_{j}}^{e_{i_{j}}}$ mod $n_{i_{j}}$ berechnen, wenn $u_{i_{j}} < n_{i_{j}}$, und $v'=u_{i_{j}}$ berechnen, wenn $u_{i_{j}} \geq n_{i_{j}}$, auf der Basis von Daten, die von den zweiten Konvertierungsmitteln aus dem genannten Speichermedium ausgelesen werden, und das Rechenergebnis in dem genannten Speichermedium speichern;

bijektive Rechenmittel, die $v=v'-n_{i_{m}}$ mod $2^{\kappa}$ auf der Basis von Daten berechnen, die von den bijektiven Rechenmmitteln aus dem genannten Speichermedium ausgelesen werden, und das Rechenergebnis in dem genannten Speichermedium speichern;

erste Konvertierungsmittel, die $U=v^{e_{i_{j}}}$ mod $n_{i_{j}}$ berechnen, wenn $v < n_{i_{j}}$, und $U=v$ berechnen, wenn v $n_{i_{j}}$, auf der Basis von Daten, die von den ersten Konvertierungsmitteln aus dem genannten Speichermedium gelesen werden, und das Rechenergebnis in dem genannten Speichermedium speichern;

$T_{j}$ 1 Rechenmittel, die $T_{j} = M_{1}\|...\| M_{j}\| pk_{i_{1}}\|...\| pk_{i_{j}}$ auf der Basis von Daten berechnen, die von den $T_{j}$ Rechenmitteln aus dem genannten Speichermedium ausgelesen werden, und das Rechenergebnis in dem genannten Speichermedium speichern, wenn die genannten zweiten Konvertierungsmittel, die genannten Bijektionsrechenmittel und die genannten ersten Konvertuierungsmittel die Schritte jedes Mal wiederholen, wenn die Variable j um eins dekrementiert wird, bis die Variable j 0 erreicht;

u Rechenmittel, die $u_{i_{j-1}}=H(T_{j})$ O U auf der Basis von Daten berechnet, die von den u Rechenmitteln aus dem genannten Speichermedium ausgelesen werden, und das Rechenergebnis in dem genannten Speichermedium speichern;

u Prüfmittel, die prüfen, ob u ein vorbestimmter Anfangswert ist; und

Ausgabemittel, die eine Verifikation-erfolgreich-Mitteilung ausgeben, wenn u der vorbestimmte Anfangswert ist, und wenn nicht, eine Verifikation-erfolglos-Mitteilung ausgeben.

10. System, das das Signaturgerät nach Anspruch 4 umfasst, und das Verifikationsgerät nach Anspruch 6.

**Revendications**

1. Procédé de signature comprenant les étapes consistant à :

a) recevoir, par des moyens d'entrée, un valeur initiale ou un texte signé $u_{i_{m-1}}$, qui est créé par une autre pluralité de dispositifs de signature qui effectuent séquentiellement une opération de signature, et des messages $M_{1}$, ..., $M_{m-1}$ entrés dans les dispositifs de signature et sauvegarder la valeur initiale ou le texte signé et les messages dans un support de stockage;

b) calculer, par des moyens de calcul de $T_{m}$, $T_{m}= M_{1}\|...\| M_{m}\| pk_{i_{1}}\|...\| pk_{i_{m}}$, où $pk_{i_{j}}$ est une clé publique d'un dispositif de signature $i_{j}$ et $\|$ est une concaténation de chaînes binaires, sur la base des données que les moyens de calcul $T_{m}$ lisent dudit support de stockage et d'un dispositif de stockage de clé publique et sauvegarder le résultat du calcul dans ledit support de stockage;

c) calculer, par des moyens de calcul de OU exclusif, $U=H(T_{m})$ O $u_{(i_{m-1})}$, où H est une fonction de hachage et O est un OU exclusif, sur la base des données que les moyens de calcul de OU exclusif lisent dudit support de support de stockage et sauvegarder le résultat du calcul dans ledit support de stockage;

d) calculer, par un premier moyen de conversion, $v=u ^ {d_{i-(m)}}$ mod $n_{i_{m}}$, si $U<n_{i_{m}}$, où $n_{i_{m}}$ est un module RSA dudit dispositif de signature, et calculer $v=U$ si $U \geq n_{i_{m}}$, sur la base des données que le premier moyen de conversion lit dudit support de stockage et sauvegarder le résultat du calcul dans ledit support de stockage;

e) calculer, par un moyen de conversion bijective, $v'=v+n_{1_m}$ mod $2 ^{k}$, où k est un paramètre de sécurité, sur la base des données que le moyen de conversion bijective lit dudit support de stockage et sauvegarder le résultat du calcul dans le support de stockage;

f) calculer, par un deuxième moyen de conversion, $u_{i_{m}}=v' ^ {d_{i_{m}}}$ mod $n_{i_m}$, si $v'<n_{i_{m}}$, ou $u_{i_{m}}=v'$ si $v' \geq n_{i_{m}}$, sur la base des données que le deuxième moyen de conversion lit dudit support de stockage et sauvegarder le résultat du calcul dans ledit support de stockage; et

g) lire $u_{i_{m}}$ dudit support de stockage, par des moyens de sortie, et sortir $u_{i_{m}}$ en tant que texte signé.

2. Procédé de signature selon la revendication 1, comprenant en outre l'étape consistant à :

calculer, par des moyens de réglage de w, $w_{i_{m}}=u_{i_{m-1}}$ ou $w_{i_{m}} = h(u_{i-{m-1}})$, où h est une fonction de hachage et sauvegarder le résultat du calcul dans ledit support de stockage, où le texte signé créé u_{i_{m}}, qui est couplé au w_{i_{m}} calculé, est sorti avec w_{i_{m}} en tant qu'information auxiliaire.

3. Procédé de vérification comprenant les étapes consistant à :

a) recevoir, par des moyens d'entrée, un texte signé u_{i_{m-1}}, qui est créé par un ou plusieurs dispositifs de signature qui effectuent séquentiellement une opération de signature, des message M_{1}, ... , M_{m-1} entrés dans les dispositifs de signature et des clés publiques pk_{i_{1}}, ... , pk_{i_{m-1}}, et sauvegarder le texte signé, les messages et les clés publiques dans un support de stockage;
b) régler, par des moyens d'initialisation, m-1 dans une variable j;
c) calculer, par un deuxième moyen de conversion, v'=u_{i_{j}} ^ {e_{i_{j}}} mod n_{i_{j}}, si u_{i_{j}} < n_{i_{j}} ou v'=u_{i_j} si u_{i_{j}} ≥ n_{i_{j}}, sur la base des données que le deuxième moyen de conversion lit dudit support de stockage et sauvegarder le résultat du calcul dans ledit support de stockage;
d) calculer, par un moyen de calcul bijectif, v=v'-n_{i_){m} mod 2^{k}, sur la base des données que le moyen de calcul bijectif lit dudit support de stockage et sauvegarder le résultat du calcul dans ledit support de stockage;
e) calculer, par un premier moyen de conversion, U=v^ {e_{i_{j}}} mod n_{i_{j}}, si v<n_{i_{j}}, ou U=v si v ≥ n_{i_{j}}, sur la base des données que le premier moyen de conversion lit dudit support de stockage et sauvegarder le résultat du calcul dans ledit support de stockage.
f) répéter les étapes, par ledit deuxième moyen de conversion, ledit moyen de calcul bijectif et ledit premier moyen de conversion, chaque fois que la variable j est décrémentée de un jusqu'à ce que la variable j atteigne 0;
g) calculer, par un moyen de calcul de T_{j}, T_{j}=M_{1} ‖ ... ‖ M_{j} ‖ pk_{i_{1}}‖... ‖ pk_{i_{j}}, sur la base des données que le moyen de calcul de T_{j} lit dudit support de stockage et sauvegarder le résultat du calcul dans ledit support de stockage;
h) calculer, par un moyen de calcul de u, u_{i_{j_-1}} = H(T_{j_}) O U, sur la base des données que le moyen de calcul de u lit dudit support de stockage et sauvegarder le résultat du calcul dans ledit support de stockage;
i) vérifier, par un moyen de vérification de u, si u est une valeur initiale prédéterminée; et
j) sortir, par des moyens de sortie, un avis de succès de vérification si u est la valeur initiale prédéterminée et, dans la négative, un avis d'échec de vérification.

4. Dispositif de signature, comprenant :

un support de stockage lisible/inscriptible;
un moyen d'entrée adapté pour recevoir une valeur initiale ou un texte signé u_{i_{m-1}}, qui est créé par une autre pluralité de dispositifs de signature qui effectuent séquentiellement une opération de signature, et des messages M_{1},..., M_{m-1} entrés dans les dispositifs de signature et sauvegarder la valeur initiale ou le texte signé et les messages dans ledit support de stockage;
un moyen de calcul de T_{m} adapté pour calculer T_{m}=M_{1} ‖... ‖ M_{m} ‖ pk_{i_{1}} ‖... ‖ pk_{i_{m}}, où pk_{i_{j} est une clé publique d'un dispositif de signature i_{j} et ‖ est une concaténation de chaînes binaires, sur la base des données lues par le moyen de calcul de T_{m} dudit support de stockage et d'un dispositif de stockage de clés publiques et sauvegarder le résultat du calcul dans ledit support de stockage;
un moyen de calcul de OU exclusif adapté pour calculer U=H(T_{m}) O u_{i_{m-1}}, où H est une fonction de hachage et O est un OU exclusif, sur la base des données lues par le moyen de calcul de OU exclusif dudit support de stockage et sauvegarder le résultat du calcul dans ledit support de stockage;
un premier moyen de conversion adapté pour calculer v=u^{d_{i_{m}} mod n_m} si U<n_{i-{m}}, où n_{i_m}} est un module RSA dudit dispositif de signature ou qui calcule v=U si U ≥ n_{i_{m}}, sur la base des données lues par le premier moyen de conversion dudit support de stockage et sauvegarder le résultat du calcul dans ledit support de stockage;
un moyen de conversion bijective adapté pour calculer v'=v+n_{i_{m}} mod 2^ {k} où k est un paramètre de sécurité, sur la base des données lues par le moyen de conversion bijective dudit support de stockage et sauvegarder le résultat du calcul dans le support de stockage;
un deuxième moyen de conversion adapté pour calculer u_{i_{m}}=v'^ {d_{i_{m}}} mod n_{i_{m}} si v'<n_{i_{m}}, et qui calcule u_{i_{m}}=v' si ≥ v' n_{i_{m}}, sur la base des données lues par le deuxième moyen de conversion dudit support de stockage et sauvegarder le résultat du calcul dans ledit support de stockage; et
un moyen de sortie adapté pour lire u_{i_{m}} dudit support de stockage et sortir u_{i_{m}} en tant que texte signé.

5. Dispositif de signature selon la revendication 4, comprenant en outre un moyen de réglage de w adapté pour calculer w_{i_{m}}=u_{i_{m-1}} où w_{i_{m}}=h(u_{i_{m-1}}), où h est une fonction de hachage et sauvegarder le résultat du calcul dans ledit support de stockage, où le texte créé signé u_{i_{m}}, qui est couplé au w_{i_{m}} calculé, est sorti avec w_{i_{m}} en tant qu'information auxiliaire.

**6.** Dispositif de vérification, comprenant :

un support de stockage lisible/inscriptible;

un moyen d'entrée adapté pour lire un texte signé $u\_{i\_{m-1}}$, qui est créé par d'autres dispositifs de signature qui effectuent séquentiellement une opération de signature, des messages $M\_{1}$, ..., $M\_{m-1}$ entrés dans les dispositifs de signature et des clés publiques $pk\_{i\_{1}}$, ... , $pk\_(1\_{m-1}}$ est sauvegarder le texte signé, les messages et les clés publiques dans ledit support de stockage;

j un moyen d'initialisation qui règle m-1 dans une variable j;

un deuxième moyen de conversion adapté pour calculer $v'=u\_{i\_{j}}^{e\_{i-{j}}} \bmod n\_{i\_{j}}$ si $u\_{i\_{j}} < n\_{i\_{j}}$ et qui calcule $v'=u\_{i\_{j}}$ si $u\_{i\_{j}} \geq n\_{i\_j}}$, sur la base des données lues par le deuxième moyen de conversion dudit support de stockage et sauvegarder le résultat du calcul dans ledit support de stockage;

un moyen de calcul bijectif adapté pour calculer $v=v'-n{i\_{m}} \bmod 2^{k}$, sur la base des données lues par le moyen de calcul bijectif dudit support de stockage et sauvegarder le résultat du calcul dans le support de stockage;

un premier moyen de conversion adapté pour calculer $U=v^{e\_{i\_{j}}} \bmod n\_{i\_{j}}$ si $v < n\_{i\_{j}}$ et qui calcule $U=v$ si $v \geq n\_{i\_{j}}$, sur la base des données lues par le premier moyen de conversion dudit support de stockage et sauvegarder le résultat du calcul dans ledit support de stockage;

un moyen de calcul de $T\_{j}$ adapté pour calculer $T\_{j}=M\_{1} \| ... \| M\_{j} \| pk\_{i\_{1}} \| ... \| pk\_{i\_{j}}$, sur la base des données lues par le moyen de calcul de $T\_{j}$ dudit support de stockage et sauvegarder le résultat du calcul dans ledit support de stockage après que ledit deuxième moyen de conversion, ledit moyen de calcul bijectif et ledit premier moyen de conversion eurent répéter les étapes chaque fois que la variable j est décrémentée de un jusqu'à ce que la variable j atteigne 0;

un moyen de calcul de u adapté pour calculer $u\_{i\_{j-1}}-H(T\_{j}})$ O U, sur la base des données lues par le premier moyen de conversion dudit support de stockage et sauvegarder le résultat du calcul dans ledit support de stockage;

un moyen de vérification de u adapté pour vérifier si u est une valeur initiale prédéterminée; et

un moyen de sortie adapté pour sortir un avis de succès de vérification si u est la valeur initiale prédéterminée et, dans la négative, sortir un avis d'échec de vérification.

**7.** Programme qui fait qu'un ordinateur possédant un support lisible/inscriptible, fonctionne en tant que :

moyen d'entrée qui reçoit une valeur initiale ou un texte signé $u\_{i\_{m-1}}$, qui est créé par une autre pluralité de dispositifs de signature qui effectuent séquentiellement une opération de signature, et des messages $M\_{1},..., M\_{m-1}$ entrés dans les dispositifs de signature et qui sauvegarde la valeur initiale ou le texte signé et les messages dans ledit support de stockage;

moyen de calcul de $T\_{m}$ qui calcule $T\_{m}=M\_{1} \| ... \| M\_{m} \| pk\_{i\_{1}} \| ...\| pk\_{i\_{m}}$, où $pk\_{i\_{j}}$ est une clé publique d'un dispositif de signature $i\_{j}$ et $\|$ est une concaténation de chaînes binaires, sur la base des données lues par le moyen de calcul de $T\_{m}$ dudit support de stockage et d'un dispositif de stockage et qui sauvegarde le résultat du calcul dans ledit support de stockage;

moyen de calcul de OU exclusif qui calcule $U=H(T\_{m})$ O $u\_{i\_{m-1}}$, où H est une fonction de hachage et O est un OU exclusif, sur la base des données lues par le moyen de calcul de OU exclusif dudit support de stockage et qui sauvegarde le résultat du calcul dans ledit support de stockage;

premier moyen de conversion qui calcule $v=u^{d\_{i\_{m}}} \bmod n\_{i\_{m}}$ si $U<n\_{i\_{m}}$, où $n\_{i\_m}}$ est un module RSA dudit dispositif de signature et qui calcule $v=U$ si $U \geq n\_{i\_{m}}$, sur la base des données lues par le premier moyen de conversion dudit support de stockage et qui sauvegarde le résultat du calcul dans ledit support de stockage;

moyen de conversion bijective adapté qui calcule $v'=v+n{i\_{m} \bmod 2^{k}$ où k est un paramètre de sécurité, sur la base des données lues par le moyen de conversion bijective dudit support de stockage et qui sauvegarde le résultat du calcul dans ledit support de stockage;

deuxième moyen de conversion qui calcule $u\_{i\_{m}}=v'^{d\_{i\_{m}}} \bmod n\_{i\_{m}}$ si $v'<n\_{i\_{m}}$ et qui calcule $u\_{i\_{m}}=v'$ si $v' \geq n\_{i\_{m}}$, sur la base des données lues par le deuxième moyen de conversion dudit support de stockage et qui sauvegarde le résultat du calcul dans ledit support de stockage; et

un moyen de sortie qui lit $u\_{i\_{m}}$ dudit support de stockage et sort $u\_{i\_{m}}$ en tant que texte signé.

**8.** Programme selon la revendication 7, qui fait en outre que l'ordinateur fonctionne comme un moyen de réglage de w qui calcule $w\_{i\_{m}}=u\_{i\_{m-1}}$ ou $w\_{i\_{m}} = h(u\_{i\_{m-1}})$, où h est une fonction de hachage et qui sauvegarde le résultat du calcul dans ledit support de stockage, où le texte signé créé $u\_{i\_{m}}$, qui est couplé au $w\_{i\_{m}}$ calculé, est sorti avec $w\_{i\_{m}}$ en tant qu'information auxiliaire.

9. Programme qui fait qu'un ordinateur possédant un support de stockage lisible/inscriptible, fonctionne en tant que :

moyen d'entrée qui lit un texte signé $u_{i_{m-1}}$, qui est créé par un ou plusieurs dispositifs de signature qui effectuent séquentiellement une opération de signature, des messages $M_{1}$,..., $M_{m-1}$ entrés dans les dispositifs de signature et des clés publiques $pk_{i_{1}}$, ... , $pk_{i_{m-1}}$ et qui sauvegarde le texte signé, les messages et les clés publiques dans ledit support de stockage;
un moyen d'initialisation de j qui règle m-1 dans une variable j;
deuxième moyen de conversion qui calcule $v'=u_{i_{j}}$ ^ $\{e_{i_{j}}\}$ mod $n_{i_{j}}$ si $u_{j}$ < $n_{i_{j}}$ et qui calcule $v'=u_{i_{j}}$ si $u_{i_{j}} \geq n_{i_{j}}$, sur la base des données lues par le deuxième moyen de conversion dudit support de stockage et qui sauvegarde le résultat du calcul dans ledit support de stockage;
moyen de calcul bijectif qui calcule $v=v'-n_{i_{m}}$ mod $2^{k}$, sur la base des données lues par le moyen de calcul bijectif dudit support de stockage et qui sauvegarde le résultat du calcul dans ledit support de stockage;
premier moyen de conversion qui calcule $U=v^{e_{i_{j}}}$ mod $n_{i_{j}}$ si $v<n_{i_{j}}$ et qui calcule U=v si v $n_{i_{j}}$, sur la base des données lues par le premier moyen de conversion dudit support de stockage et qui sauvegarde le résultat du calcul dans ledit support de stockage;
moyen de calcul de $T_{j}$ qui calcule $T_{j}=M_{1} \| ... \| M_{j} \| pk_{i_{1}} \| ... \| pk_{i_{j}}$, sur la base des données lues par le moyen de calcul de $T_{j}$ dudit support de stockage et d'un dispositif de stockage et qui sauvegarde le résultat du calcul dans ledit support de stockage après que ledit deuxième moyen de conversion, ledit moyen de calcul bijectif et ledit premier moyen de conversion eurent répété les étapes chaque fois que la variable j est décrémentée de un jusqu'à ce que la variable atteigne 0;
moyen de calcul de u qui calcule $u_{i_{j_1}}=H(T_{j})$ O U, sur la base des données lues par le moyen de calcul de u dudit support de stockage et qui sauvegarde le résultat du calcul dans ledit support de stockage;
moyen de vérification de u qui vérifie si u est une valeur initiale prédéterminée; et
un moyen de sortie qui sort un avis de succès de vérification si u est la valeur initiale prédéterminée et, dans la négative, sort un avis d'échec de vérification.

10. Système comprenant le dispositif de signature selon la revendication 4 et le dispositif de vérification selon la revendication 6.

FIG. 1

# FIG. 2

SIGNATURE DEVICE i_{m}

INPUT MEANS — S1B100

S1B101

VERIFICATION DEVICE i_{m}-2

S1B108

STORAGE MEDIUM

T_{m} CALCULATION MEANS — S1B103

EXCLUSIVE OR CALCULATION MEANS — S1B104

FIRST CONVERSION MEANS — S1B105

BIJECTIVE CONVERSION MEANS — S1B106

SECOND CONVERSION MEANS — S1B107

OUTPUT MEANS — S1B109

KEY VERIFICATION DEVICE i_{m}-4

S1B102

# FIG. 3

```
                    ┌──────────────────────────┐
                    │          INPUT           │ ～ S1F100
                    └──────────────────────────┘
                                 │
                    ┌──────────────────────────┐
                    │ (KEY VALIDITY VERIFICATION)│ ～ S1F101
                    └──────────────────────────┘
                                 │
                    ┌──────────────────────────┐
                    │ (SIGNED TEXT VERIFICATION) │ ～ S1F102
                    └──────────────────────────┘
                                 │
                    ┌──────────────────────────┐
                    │    T_{m} CALCULATION     │ ～ S1F103
                    └──────────────────────────┘
                                 │
                    ┌──────────────────────────┐
                    │ U = H(T_{m}) ○ u_{i_{m-1}}│ ～ S1F104
                    └──────────────────────────┘
```

$U = H(T_{m}) \circ u_{i_{m-1}}$

S1F105 — $U < n_{i_{m}}$ — NO $\quad f^{-1}(x)$

YES

S1F106 — $v = U^{d_{i_{m}}} \bmod n_{i_{m}}$

S1F107 — $v = U$

$h^{-1}(x)$

S1F108 — $v' = v + n_{i_{m}} \bmod 2^{\kappa}$ $\quad \phi^{-1}(x)$

S1F109 — $v' < n_{i_{m}}$ — NO $\quad g^{-1}(x)$

YES

S1F1010 — $u_{i_{m}} = v'^{d_{i_{m}}} \bmod n_{i_{m}}$

S1F1011 — $u_{i_{m}} = v'$

```
                    ┌──────────────────────────┐
                    │          OUTPUT          │ ～ S1F1012
                    └──────────────────────────┘
```

# FIG. 4

VERIFICATION DEVICE i_{m}-2

INPUT MEANS — V1B100

SIGNATURE DEVICE

i_{m}

V1B102 — j INITIALIZATION MEANS

V1B103 — j CHECKING MEANS

V1B109 — j DECREASE MEANS

V1B104 — SECOND CONVERSION MEANS

BIJECTIVE CONVERSION MEANS

V1B105 — FIRST CONVERSION MEANS

V1B106 — T_{j} CALCULATION MEANS

V1B107 — u CALCULATION MEANS

V1B108

STORAGE MEDIUM

V1B1011 — u CHECKING MEANS

ACCEPT OUTPUT MEANS

REJECT OUTPUT MEANS

V1B1012   V1B1013

V1B1010

KEY VERIFICATION DEVICE i_{m}-4 — V1B101

# FIG. 5

INPUT — VIF100

KEY VALIDITY VERIFICATION — VIF101

$j = m - 1$ — VIF102

VIF103 — $j > 0$ — NO

VIF1014 — $u = 0$ — NO

YES

YES

OUTPUT ACCEPT — VIF1015

OUTPUT REJECT — VIF1016

h(x)

g(x)

VIF104 — $u\_\{i\_\{j\}\} < n\_\{i\_\{j\}\}$ — NO

VIF105 — YES — VIF106

$v' = u\_\{i\_\{j\}\}^{\{e\_\{i\_\{j\}\}\}} \bmod n\_\{i\_\{j\}\}$

$v' = u\_\{i\_\{j\}\}$

φ(x)

$v = v' - n\_\{i\_\{j\}\} \bmod 2^{\{\kappa\}}$ — VIF107

f(x)

VIF108 — $v < n\_\{i\_\{j\}\}$ — NO

VIF109 — YES — VIF1010

$U = v^{\{e\_\{i\_\{j\}\}\}} \bmod n\_\{i\_\{j\}\}$

$U = v$

T_{j} CALCULATION — VIF1011

$u\_\{i\_\{j-1\}\} = H(T\_\{j\}) \bigcirc U$ — VIF1012

$j = j - 1$ — VIF1013

# FIG. 6

EP 1 819 090 B1

EP 1 819 090 B1

# FIG. 7

... | SIGNATURE DEVICE i_{m}

INPUT MEANS — S1B100

S1B108

VERIFICATION DEVICE i_{m}-2 — S1B101

STORAGE MEDIUM

W SETTING MEANS — S2B100

T_{m} CALCULATION MEANS — S1B103

EXCLUSIVE OR CALCULATION MEANS — S1B104

FIRST CONVERSION MEANS — S1B105

BIJECTIVE CONVERSION MEANS — S1B106

SECOND CONVERSION MEANS — S1B107

OUTPUT MEANS — S1B109

KEY VERIFICATION DEVICE i_{m}-4 — S1B102

# FIG. 8

INPUT — S1F100

(KEY VALIDITY VERIFICATION) — S1F101

(SIGNED TEXT VERIFICATION) — S1F102

$w\_{i\_{m}} = u\_{i\_{m-1}}$ — S2F100

$T\_{m}$ CALCULATION — S1F103

$U = H(T\_{m}) \bigcirc u\_{i\_{m-1}}$ — S1F104

$f^{-1}(x)$

S1F105 $U < n\_{i\_{m}}$ — NO

YES

S1F106 $v = U^{d\_{i\_{m}}} \bmod n\_{i\_{m}}$

S1F107 $v = U$

$h^{-1}(x)$

$\phi^{-1}(x)$

S1F108 $v' = v + n\_{i\_{m}} \bmod 2^{\kappa}$

$g^{-1}(x)$

S1F109 $v' < n\_{i\_{m}}$ — NO

YES

S1F1010 $u\_{i\_{m}} = v'^{d\_{i\_{m}}} \bmod n\_{i\_{m}}$

S1F1011 $u\_{i\_{m}} = v'$

OUTPUT — S1F1012'

# FIG. 9

VERIFICATION DEVICE i_{m}-2

SIGNATURE DEVICE i_{m}

INPUT MEANS — V2B200

STORAGE MEDIUM

T_{m-1} CALCULATION MEANS — V2B202

v'' CALCULATION MEANS — V2B203

SECOND CONVERSION MEANS — V2B204

BIJECTIVE CONVERSION MEANS — V2B205

FIRST CONVERSION MEANS — V2B206

V2B2010

u CHECKING MEANS — V2B207

ACCEPT OUTPUT MEANS

REJECT OUTPUT MEANS

V2B208    V2B209

KEY VERIFICATION DEVICE i_{m}-4 — V2B201

# FIG. 10

```
                    ┌─────────────────────────┐
                    │         INPUT           │ ⟍ V2F200
                    └─────────────────────────┘
                                │
                    ┌─────────────────────────┐
                    │ KEY VALIDITY VERIFICATION│ ⟍ V2F201
                    └─────────────────────────┘
                                │
                    ┌─────────────────────────┐
                    │  T_{m-1} CALCULATION     │ ⟍ V2F202
                    └─────────────────────────┘
                                │
                    ┌──────────────────────────────┐
                    │ v" = H ( T_{m-1} ) ○ u_{i_{m-1}} │ ⟍ V2F203
                    └──────────────────────────────┘
```

$v'' = H ( T_{m-1} ) \bigcirc u_{i_{m-1}}$ — V2F203

h (x)

g(x)

V2F204

$v'' < n_{i_{m-1}}$  — NO

V2F205 — YES

$v' = v''^{e_{i_{m-1}}} \bmod n_{i_{m-1}}$

V2F206

$v' = v''$

$\phi(x)$

$v = v' - n_{i_{m-1}} \bmod 2^{\kappa}$ — V2F207

f(x)

V2F208

$v < n_{i_{m-1}}$ — NO

V2F209 — YES

$u_{i_{m-2}} = v^{e_{i_{m-1}}} \bmod n_{i_{m-1}}$

V2F2010

$u_{i_{m-2}} = v$

V2F2011

$u_{i_{m-2}} = w_{i_{m-1}}$ — NO

YES

OUTPUT ACCEPT — V2F2012

OUTPUT REJECT — V2F2013

# FIG. 11 CONVENTIONAL ART

```
┌─────────────────────────────────┐
│             INPUT               │ ～ S3F100
└─────────────────────────────────┘
                │
┌─────────────────────────────────┐
│    KEY VALIDITY VERIFICATION    │ ～ S3F101
└─────────────────────────────────┘
                │
┌─────────────────────────────────┐
│    SIGNED TEXT VERIFICATION     │ ～ S3F102
└─────────────────────────────────┘
                │
┌─────────────────────────────────┐
│        T_{m} CALCULATION        │ ～ S3F103
└─────────────────────────────────┘
                │
┌─────────────────────────────────┐
│   U=H(T_{m}) O u_{i_{m-1}}       │ ～ S3F104
└─────────────────────────────────┘
                │
┌─────────────────────────────────┐
│ a := FIRST K BITS OF U (SIGNATURE) │ ～ S3F105
│ s := REMAINING BITS OF U (CONTROL BITS) │
└─────────────────────────────────┘
                │
          ┌─────────────┐  ～ S3F106
   NO    ◇  a < n_{i_{m}} ◇
          └─────────────┘
                │ YES
┌───────────────────────────────────────────────┐
│ u_{i_{m}} = a^{d_{i_{m}}} mod n_{i_{m}} , s := s∥0 │ ～ S3F107
└───────────────────────────────────────────────┘
                │
┌───────────────────────────────────────────────────────┐
│ u_{i_{m}} = (a − n_{i_{m}})^{d_{i_{m}}} mod n_{i_{m}} , s := s∥1 │ ～ S3F108
└───────────────────────────────────────────────────────┘
                │
┌─────────────────────────────────┐
│            OUTPUT               │ ～ S3F109
└─────────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Sequential Aggregate Signatures from Trapdoor Permutations. **Anna Lysyanskaya ; Silvio Micali ; Leonid Reyzin ; Hovav Shacham.** Advances in Cryptology -- EUROCRYPT 2004. Springer-Verlag, 2004, vol. 3027, 74-90

- **Alfred J. Menezes ; Paul C. van Oorschot ; Scott A. Vanstone.** Handbook of Applied Cryptography. CRC Press